Europäisches Patentamt

European Patent Office

Office européen des brevets

(19)

(11) **EP 0 638 454 B1**

(12) **EUROPÄISCHE PATENTSCHRIFT**

(45) Veröffentlichungstag und Bekanntmachung des Hinweises auf die Patenterteilung:
**05.11.1997 Patentblatt 1997/45**

(51) Int. Cl.⁶: **B60K 41/02**

(21) Anmeldenummer: **94110720.3**

(22) Anmeldetag: **08.07.1994**

(54) **Vorrichtung und Verfahren zum Regeln einer Anfahrvorrichtung eines Fahrzeugantriebes**

Control system for torque transfer means in vehicle driveline

Système et dispositif de réglage pour l'embrayage d'un véhicule

(84) Benannte Vertragsstaaten:
**DE FR GB IT**

(30) Priorität: **10.08.1993 DE 4326783**
**16.12.1993 DE 4342945**

(43) Veröffentlichungstag der Anmeldung:
**15.02.1995 Patentblatt 1995/07**

(73) Patentinhaber: **Dr.Ing.h.c. F. Porsche Aktiengesellschaft**
**70435 Stuttgart (DE)**

(72) Erfinder:
• **Földi, Thomas**
**D-70435 Stuttgart (DE)**
• **Stehle, Heinz**
**D-71287 Weissach (DE)**
• **Heim, Udo**
**D-71229 Leonberg (DE)**
• **Tran Xuan, Hai**
**D-70825 Korntal-Münchingen (DE)**
• **Wüst, Rainer**
**D-75446 Wiernsheim (DE)**

(56) Entgegenhaltungen:
EP-A- 0 043 661          EP-A- 0 130 794
DE-A- 3 606 229          GB-A- 2 153 035
US-A- 5 010 989

## Beschreibung

Die Erfindung betrifft ein Verfahren und eine Vorrichtung zum Regeln einer Anfahreinrichtung eines Fahrzeugantriebes nach der Gattung des Anspruchs 1 bzw des Anspruchs 17.

Unter Anfahreinrichtungen sind allgemein Vorrichtungen zu verstehen, die bei Fahrzeugantrieben ein Anfahren des Fahrzeuges ermöglichen. Hierunter fallen beispielsweise die bekannten Arten von Drehzahlwandlern (Ein- und Ausgangsdrehzahl unterschiedlich, Eingangs- und Ausgangsdrehmoment gleich) wie Reibungskupplungen, Magnet- und Magnetpulverkupplungen sowie hydrodynamische (Wandler-)Kupplungen. Mit Fahrzeugantrieben sind hier insbesondere solche Antriebe gemeint, die erst ab einer Drehzahl größer Null ein verwertbares Drehmoment liefern, und demzufolge nicht in starrer Ankopplung an die anzutreibende Einrichtung angefahren werden können. Der Bereich oberhalb dieser Drehzahl wird als Leistungsbereich, der Bereich darunter als Anfahrbereich oder Anfahrlücke bezeichnet.

Aus der DE-32 09 645 A1 ist eine Vorrichtung zum Regeln einer Kraftfahrzeug-Antriebseinheit bekannt geworden, bei der ein Steuergerät einen Stellantrieb einer hydraulischen Kupplung so ansteuert, daß das Drehmoment an der Kupplung proportional einem Vorsteuerwert und proportional dem Quadrat der Motordrehzahl ist. Der Vorsteuerwert wird über einen Kennlinienwandler aus dem Signal eines Fahrpedalgebers gewonnen. Das Signal des Drehzahlgebers steuert gleichzeitig über einen zweiten Kennlinienwandler die Drosselklappe und damit das Motordrehmoment der Kraftfahrzeug-Antriebseinheit.

Ferner ist aus der DE 36 06 229 A1 eine Einrichtung zum automatischen Steuern des Starts eines motorbetriebenen Fahrzeuges bekannt, welche dazu verwendet wird, um eine Reibungskupplung entsprechend der Betätigung eines Gaspedales automatisch einzukuppeln. Hierzu wird die Stellung des Gaspedales erfaßt und eine erste, auf den Motor wirkende Steuereinrichtung hält die Motordrehzahl auf einer Solldrehzahl, die abhängig von der Stellung des Gaspedales bestimmt wurde. Eine zweite, auf die Kupplung wirkende Steuereinrichtung steuert den Schlupf der Kupplung über eine bestimmte Zeit entsprechend Kenndaten, die ebenfalls abhängig von der Stellung des Gaspedales gewählt sind.

Aus der GB-A-2 153 035 das die Merkmale des Oberbegriffs der Ansprüche 1 und 17 beinhaltet, ist es bereits bekannt eine Kupplung, die einer Antriebsmaschine nachgeschaltet ist, so anzusteuern, daß der Einrückvorgang in zumindest zwei Phasen abläuft: Eine erste Phase zum Anlegen der Kupplung, die mit dem Erkennen einer Anforderung eines Anfahrvorganges beginnt und endet wenn ein vorgegebener Kupplungseingriff erreicht ist. In einer sich hieran anschließenden zweiten Phase erfolgt ein kontrolliertes Einrücken der Kupplung. Konkret sollen die Stellung der Drosselklappe, die Motordrehzahl und die Drehzahl ausgangsseitig der Kupplung erfaßt werden. Eine erste Phase beginnt, wenn das Drosselklappensignal größer als Null wird und zum Anlegen der Kupplung wird an der Kupplung ein zuvor adaptiv bestimmter Druck eingestellt. Nach Erreichen dieses Druckes schließt sich eine zweite Phase an, wenn eine Bremse des Fahrzeuges oder ein im Fahrzeug angeordneter Manövrierschalter betätigt sind. Während der zweiten Phase wird der Druck an der Kupplung so eingestellt, daß die Änderung der Motordrehzahl im wesentlichen Null bleibt. An diese zweite Phase oder, wenn die vorgenannten Bedingungen nicht erfüllt sind, unmittelbar an die erste Phase schließt sich eine dritte Phase an, in der die Kupplung kontrolliert geschlossen wird. Hierzu wird die Druckanstiegsrate in der Kupplung abhängig von der ermittelten Beschleunigung der Motordrehzahl eingestellt. Die dritte Phase endet, wenn Motordrehzahl und Ausgangsdrehzahl der Kupplung gleich sind. Schließlich wird in einer vierten Phase die Kupplung mit dem Betriebsdruck beaufschlagt und somit sicher geschlossen.

Es ist Aufgabe der Erfindung, eine Vorrichtung und ein Verfahren zum Regeln einer Anfahreinrichtung zu schaffen, die bezüglich der Berücksichtigung von Wünschen des Fahrers einerseits und der Berücksichtigung der Fahrzeugumgebung andererseits verbessert sind.

Die Aufgabe wird erfindungsgemäß durch die Merkmale der unabhängigen Ansprüche gelöst. Von besonderem Vorteil ist, daß die Anfahrdynamik und die Agilität ohne Abstriche am Parkierkomfort verbessert werden. Gleichzeitig wird die Anfahreinrichtung besser geschont, vor Mißbrauch mit Überlastung geschützt und sicher vor Zerstörung bewahrt. Hierzu wird der Anfahrvorgang in zwei Phasen durchgeführt wird, nämlich in einer ersten Phase, in der die Eingangsdrehzahl zu einer Solldrehzahl hingeführt wird, und in einer sich hieran anschließenden zweiten Phase, in der ein aus der Differenz zwischen Eingangsdrehzahl und Ausgangsdrehzahl gebildetes Differenzdrehzahlsignal einem vorgegebenen Sollverlauf bis zum Wert Null nachgeführt wird. Das Anfahrverhalten ist durch die Erfindung unabhängig von Veränderungen der Verhältnisse an der Anfahreinrichtung, die beispielsweise als Folge von Belastung und Verschleiß auftreten können.

Die in den Unteransprüchen beschriebenen Weiterbildungen können sowohl in Kombination als auch jede für sich vorteilhafte Wirkungen entfalten.

So wird vorgeschlagen, die erste Phase beginnen zu lassen, wenn die Anfahreinrichtung nicht vollständig geschlossen ist und die Stellung des Leistungssteuerorganes unterhalb eines Grenzwertes liegt. Hierdurch wird jeder Anfahrvorgang erkannt, unabhängig davon, ob es sich um ein Anfahren aus dem Stillstand oder eine Wiederanfahrt nach einem Verzögern nicht ganz bis zum Stillstand handelt. Innerhalb der ersten Phase wird zunächst die Solldrehzahl abhängig von der Stellung des Leistungssteuerorganes, der zeitlichen Änderung der Stellung des Leistungssteuerorganes und einem den Fahrstil des Fahrers beschreibenden Signal bestimmt, und so schon an den Fahrstil des Fahrers bzw. seinen Fahrwunsch angepaßt. Während der Fahrstil über einen längeren Zeitraum erfaßt wird, und damit beim ersten Anfahren nach dem Start des Fahrzeuges noch auf seinem Grundwert steht, kann der Anfahrvorgang über das Leistungssteuerorgan deutlich beeinflußt werden, wobei neben der absoluten Stellung auch die Geschwindigkeit, mit der das Leistungssteuerorgan dorthin gebracht wurde, berücksichtigt wird. Mit Hilfe der so ermittelten Solldrehzahl wird anschließend eine Sollkurve eines Steuersignales für ein Stellglied der Anfahreinrichtung so bestimmt, daß bei der aktuellen Stellung des Leistungssteuerorganes diese Solldrehzahl auch erreicht wird. So wird berücksichtigt, daß ausgehend von der Leerlaufdrehzahl nicht jede Solldrehzahl auf dem gleichen Wege, d.h. entlang der gleichen Kennlinie, erreicht werden kann. Schließlich, und hier beginnt der eigentliche Anfahrvorgang, wird über die Kennlinie abhängig von der Stellung des Leistungssteuerorganes und dem Eingangsdrehzahlsignal die Stelleinrichtung so mit dem Steuersignal angesteuert, daß sich das Eingangsdrehzahlsignal der Solldrehzahl annähert.

Für die zweite Phase des Anfahrvorganges wird vorgeschlagen, diese beginnen zu lassen, wenn das Eingangsdrehzahlsignal die Solldrehzahl annähernd erreicht hat. Um auch Fälle zu berücksichtigen, in denen nur langsam und mit konstanter Leistung beschleunigt wird, ist es darüber hinaus vorgesehen, die zweite Phase in jedem Fall zu beginnen, wenn eine vorgegebene Fahrgeschwindigkeit erreicht ist. In der zweiten Phase wird ein Drehzahldifferenzsignal, d.h. der in der Anfahreinrichtung herrschende Schlupf, nach einer Sollkurve gegen Null geführt. Die Geschwindigkeit, mit der nach dieser Sollkurve das Drehzahldifferenzsignal geändert wird, ist wiederum von dem Drehzahldifferenzsignal abhängig und wird immer kleiner, je kleiner das Drehzahldifferenzsignal ist. Durch die Sollkurve, die durch die Rückführung des Drehzahldifferenzsignales in einem geschlossenen Regelkreis wirkt, bleibt diese zweite Phase von äußeren Einflüssen wie Temperatur und Abnutzung unbeeinflußt. Der Verlauf der Sollkurve und damit der Anfahrkomfort kann in weiten Bereichen eingestellt werden; durch den vorgeschlagenen Verlauf der Sollkurve ist zum Beispiel ein besonders komfortables Einkuppeln möglich, da in der Nähe des Kupplungspunktes Eingangs- uns Ausgangsdrehzahlsignal immer langsamer und damit ruckfrei einander angenähert werden. Dieser Übergang zwischen fast geschlossener und ganz geschlossener Anfahreinrichtung verläuft so ohne störende stoßartige Übergänge.

Die Beobachtung der thermischen Belastung der Kupplung ist notwendig, um eine drohende thermische Zerstörung rechtzeitig erkennen zu können. Hierzu wird vorgeschlagen, einen Belastungswert zu ermitteln, der die bisher in Anspruch genommene Ausnutzung der Belastungsfähigkeit der Anfahreinrichtung repräsentiert und mit dessen Hilfe der Anfahrvorgang beeinflusst werden kann. Bei Belastung wird der Belastungswert durch Berechnung der in der Kupplung entstehenden Reibleistung und bei Entlastung durch eine Abkühlfunktion berechnet. Erfindungsgemäß wird der Anfahrvorgang abhängig von der Ausnutzung der Belastbarkeit der Anfahreinrichtung durchgeführt und so ein plötzliches Erreichen oder Überschreiten der Belastungsgrenze vermieden. Die Beeinflussung des Anfahrvorganges erfolgt in besonders einfacher Weise durch eine vom Belastungswert abhängige Bestimmung der Solldrehzahl, besonders durch Absenken der Solldrehzahl mit steigendem Belastungswert.

Die weiteren Unteransprüche betreffen Maßnahmen, die unabhängig bzw. zusätzlich zu den bisher beschriebenen Maßnahmen unter besonderen Umständen eingesetzt werden, um das Gesamtverhalten der Anfahreinrichtung unter allen denkbaren Umständen zu verbessern. So ist für den Fall, daß die Belastungsgrenze der Anfahreinrichtung erreicht oder gar überschritten werden könnte, vorgesehen, den Fahrer hiervon zu informieren, wobei außer dem Überschreiten der Belastungsgrenze schon zuvor die Größe der noch verbliebenen Belastungsreserve angezeigt wird. Ferner sind Maßnahmen vorgesehen, mit denen das antriebslose Losrollen des Fahrzeuges verbessert wird, wenn durch das Erreichen der Belastungsgrenze die Anfahreinrichtung geöffnet werden muß. Damit werden vom Fahrer nicht erwartete Reaktionen des Fahrzeuges verhindert.

Um den Einfluss aus Abnutzung, Temperatur, Alterung etc. der Anfahreinrichtung sowie des auf die Anfahreinrichtung wirkenden Stellelementes auf den Anfahrvorgang zu minimieren, sind Maßnahmen zur Bestimmung eines Anlagestellsignales aufgezeigt. Dieses Anlagestellsignal wird immer wieder so bestimmt, daß, wenn das Stellelement mit diesem Signal beaufschlagt ist, die Anfahreinrichtung nahe am Eingriffs- oder Schleifpunkt betrieben wird, so daß mit einer weiteren Erhöhung des Signales die Anfahreinrichtung unmittelbar zu fassen beginnt. Das aufgezeigte Verfahren zur Bestimmung des Anlagestellsignales zeichnet sich hierbei durch eine besonders robuste Wirkungsweise unter allen Betriebsbedingungen aus.

Weiter wird vorgeschlagen, unter bestimmten Bedingungen, z.B. bei Stillstand des Fahrzeuges, durch Vermindern des Stellsignales um einen vorgegebenen Betrag die Anfahreinrichtung sicher zu öffnen, um so die Belastung der Anfahreinrichtung zu minimieren und ein Kriechen des Fahrzeuges zu verhindern.

In Ergänzung hierzu wird vorgeschlagen, unter bestimmten Bedingungen, z.B. nach Stillstand des Fahrzeuges oder nach einem vorausgehenden (negativen) Stellimpuls, einen (positiven) Stellimpuls abzugeben, mit dem in der Anfahreinrichtung vorhandene Leerwege überwunden werden und damit im Stellelement möglichst rasch das Anlagestellsignal wieder erreicht wird, um baldmöglichst wieder ein Fassen der Anfahreinrichtung einleiten und schneller auf einen Anfahrwunsch des Fahrers reagieren zu können

Durch selbsttätiges Schließen der Anfahreinrichtung bei Anrollen des Fahrzeuges ohne Leistungsanforderung, wie z.B. an einem Gefälle, bleibt die Bremswirkung des Motors erhalten.

Schließlich sind Maßnahmen aufgezeigt, mit denen die Leistungsfähigkeit des Motors in größtmöglichem Umfange zur Beschleunigung des Fahrzeuges herangezogen wird. Von besonderem Vorteil ist es hierbei, daß diese Maßnahmen nur auf ein besonderes Anforderungssignal hin ergriffen werden, und daß hiermit unbeabsichtigter Gebrauch und Mißbrauch verhindert werden.

Die Erfindung ist nachstehend anhand des in den Zeichnungen dargestellten Ausführungsbeispieles erläutert.

Es zeigen:

Fig. 1     eine Übersicht über eine erfindungsgemäße, auf eine Fahrzeug-Abtriebseinheit wirkende Regelvorrichtung,

Fig. 2     ein in einem ersten Kennlinienwandler vorgesehenes dreidimensionales Kennfeld einer Solldrehzahl aus einem Drosselklappensignal, der zeitlichen Änderung dieses Signales, sowie einer Fahraktivität,

Fig. 3     ein in einem zweiten Kennlinienwandler vorgesehenes Kennfeld eines Solldrucksignales abhängig von einem Eingangsdrehzahlsignal,

Fig. 4     ein in einer Regeleinrichtung zur Bestimmung einer Führungsgröße verwendetes Kennfeld einer Solländerung eines Differenzdrehzahlsignales in Abhängigkeit von dem Differenzdrehzahlsignal sowie Verläufe des Differenzdrehzahlsignales über der Zeit für zwei Anfahrvorgänge,

Fig. 5     Verläufe des Eingangsdrehzahlsignales über der Zeit für zwei Anfahrvorgänge und

Fig. 6     in einem schematisierten Ablaufdiagramm den Ablauf eines Anfahrvorganges.

Hier und im folgenden stehen die unterstrichen dargestellten Begriffe und / oder für die gleichnamigen Verknüpfungen der Bool'schen Algebra.

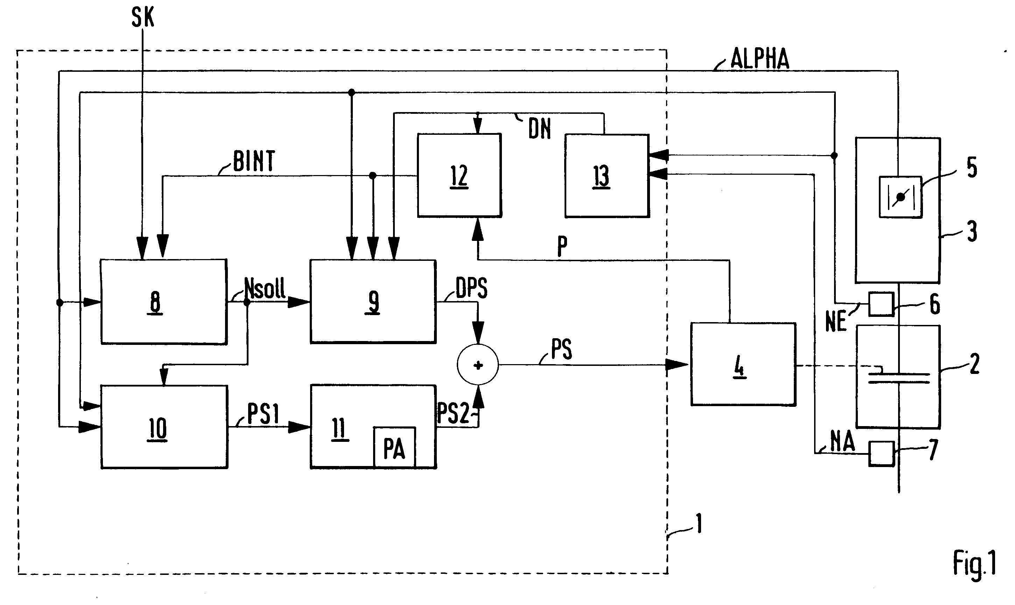

In **Fig. 1** ist eine Regelvorrichtung 1 einer als Reibungskupplung 2 ausgeführten Anfahreinrichtung einer Antriebsmaschine 3 eines nicht dargestellten Fahrzeuges gezeigt, die auf ein mit der Kupplung 2 verbundenes Stellglied 4 einwirkt. Das Stellglied 4 betätigt die Kupplung 2, so daß diese einen Kraftfluss von der Antriebsmaschine 3 zwischen 0 % (vollständig geöffnet) und 100 % (vollständig geschlossen) überträgt. Ein an der Antriebsmaschine 3 angeordneter Drosselklappengeber 5 liefert an die Regelvorrichtung 1 ein Drosselklappensignal ALPHA. An der Kupplung 2 sind ein Eingangsdrehzahlgeber 6, der ein Eingangsdrehzahlsignal NE liefert, sowie ein Ausgangsdrehzahlgeber 7, der ein Ausgangsdrehzahlsignal NA liefert, angeordnet. Das Stellglied 4 empfängt als Eingangssignal von der Regelvorrichtung 1 ein Solldrucksignal PS und gibt an die Regelvorrichtung 1 ein Drucksignal P aus, das den auf die Kupplung 2 ausgeübten Druck und damit das durch die Kupplung 2 übertragene Drehmoment repräsentiert. Das Drucksignal P ist im vorliegenden Fall das Eingangssignal des Stellgliedes 4 und damit mit dem Solldrucksignal PS identisch; wo der hierzu notwendige Aufwand vertretbar ist, kann das Drucksignal P auch durch einen Druckgeber an der Kupplung 2 oder durch ähnliche Einrichtungen tatsächlich ermittelt werden.

Die **Regelvorrichtung 1** besteht aus einem ersten Kennlinienwandler 8, einer Regeleinrichtung 9, einem zweiten Kennlinienwandler 10, einer Steuereinrichtung 11, einer Belastungsrecheneinheit 12 sowie einem Differenzbildner 13. Der erste Kennlinienwandler 8 bestimmt abhängig von dem Drosselklappensignal ALPHA, dessen zeitlicher Ableitung dALPHA/dt sowie einer Fahraktivität SK des Fahrers eine Solldrehzahl Nsoll. Die Solldrehzahl Nsoll wird an die Regeleinrichtung 9 und den zweiten Kennlinienwandler 10 weitergegeben. Der zweite Kennlinienwandler 10 bestimmt aus dem Drosselklappensignal ALPHA, der Solldrehzahl Nsoll und dem Eingangsdrehzahlsignal NE ein erstes Solldrucksignal PS1, das als erstes Stellsignal an die Steuereinrichtung 11 weitergegeben wird. Diese modifiziert das erste Solldrucksignal PS1 dann noch mit weiteren Größen und bildet so ein zweites Solldrucksignal PS2. Die Regeleinrichtung 9 bestimmt ein Differenzsolldrucksignal DPS mit Hilfe des Eingangsdrehzahlsignales NE, eines mittels des Differenzbildners 13 aus dem Eingangsdrehzahlsignal NE und dem Ausgangsdrehzahlsignal NA gebildeten Differenzdrehzahlsignal DN sowie, wie bereits erwähnt, der Solldrehzahl Nsoll. Das aus dem zweiten Solldrucksignal PS2 sowie dem Differenzsolldrucksignal DPS als Summensignal gebildete Solldrucksignal PS wird an das Stellglied 4 ausgegeben, das nach Maßgabe des Solldrucksignales PS auf die Kupplung 2 wirkt. Die Belastungsrecheneinheit 12 erhält das Differenzdrehzahlsignal DN und das Drucksignal P und ermittelt hieraus einen Belastungswert BINT, der an den ersten Kennlinienwandler 8 und die Regeleinrichtung 9 weitergegeben wird.

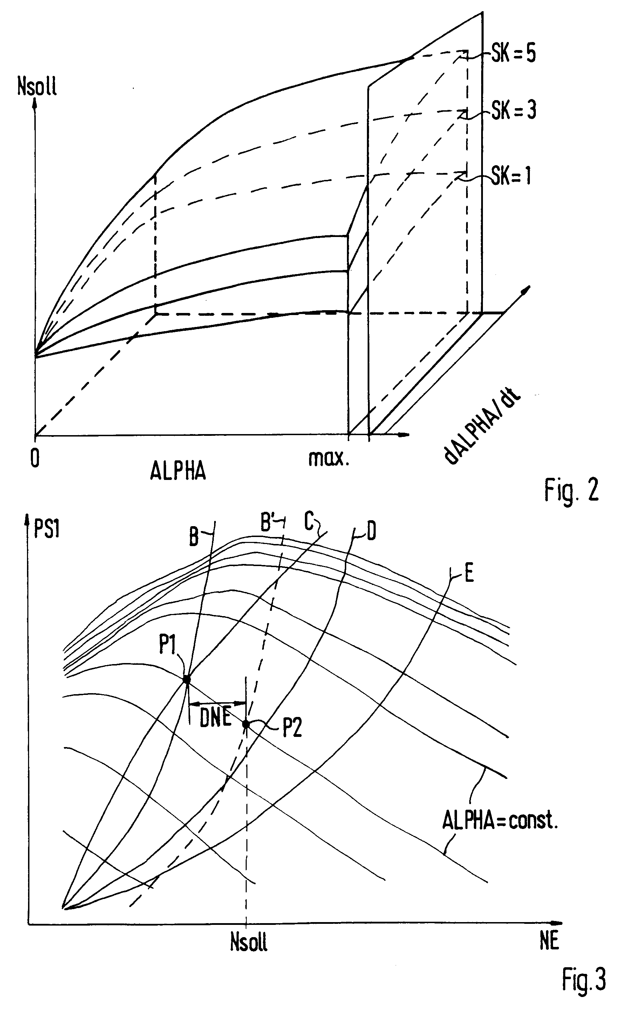

Der **erste Kennlinienwandler 8** bestimmt die Solldrehzahl Nsoll mit Hilfe eines in Figur 2 qualitativ dargestellten dreidimensionalen Kennfeldes aus dem Drosselklappensignal ALPHA, der zeitlichen Änderung dALPHA/dt dieses Signales, d.h. der Drosselklappengeschwindigkeit, sowie der Fahraktivität SK, die in der aus der DE 39 22 051 A1 bekannten Weise einen Fahrstil des Fahrers oder dessen verkehrssituationsbedingtes Handeln beschreibt. Die Solldrehzahl Nsoll steigt mit steigendem Drosselklappensignal ALPHA und mit steigender Drosselklappengeschwindigkeit dALPHA/dt an, wobei der Anstieg bei einer Fahraktivität SK = 1, die eher einer komfortorientierten Fahrweise entspricht, gering ist und bei einer Fahraktivität SK = 5, die einer sportlichen Fahrweise entspricht, sehr groß ist. Die höchste Solldrehzahl Nsoll wird demnach bei maximalem Drosselklappensignal ALPHA, maximaler Drosselklappengeschwindigkeit dALPHA/dt und sportlicher Fahrweise erreicht.

An den bisher beschriebenen Bereich schließt sich ein Kick-Down-Bereich an, der durch Überwinden eines Widerstandes am Anschlag der Drosselklappe erreicht wird. Das Drosselklappensignal ALPHA behält hierbei unverändert seinen Maximalwert. Dieser Bereich ähnelt der bekannten Kick-Down-Funktion eines Automatgetriebes; in diesem Bereich ist nur noch eine Kennlinie vorgesehen, die unabhängig von der Fahraktivität SK ist, oberhalb der Kennlinie für sportliche Fahrweise liegt und flacher als diese verläuft. Im Kick-Down-Bereich werden schon bei geringer Drosselklappengeschwindigkeit dALPHA/dt hohe Solldrehzahlen Nsoll erreicht, so daß in jedem Fall eine leistungsorientierte Sonderanfahrt unabhängig vom erkannten Fahrstil und weitgehend unabhängig von der Drosselklappengeschwindigkeit dALPHA/dt möglich ist.

Der **zweite Kennlinienwandler 10** beinhaltet ein Kennfeld des ersten Solldrucksignales PS1 über Eingangsdrehzahlsignal NE, **Fig. 3**, das aus einem Motormoment über Motordrehzahl darstellenden Motorkennfeld gebildet ist. Eingetragen sind Linien des ersten Solldrucksignales PS1 für ein konstantes Drosselklappensignal ALPHA in Abhängigkeit vom Eingangsdrehzahlsignal NE, die dem Verlauf des Motormomentes über der Motordrehzahl für eine vorgegebene Drosselklappeneinstellung entsprechen. Ferner ist eine Kennlinie B eingetragen, die einen gewünschten Sollverlauf des ersten Solldrucksignales PS1 abhängig vom Eingangsdrehzahlsignal NE darstellt. Die Kennlinie B steigt im dargestellten Beispiel exponentiell mit wachsendem Eingangsdrehzahlsignal NE an.

Vergleichbar einer Vorsteuerung und einer Feinsteuerung wird die Kennlinie B zunächst abhängig von der Drosselklappengeschwindigkeit dALPHA/dt angepaßt (Vorsteuerung) und anschließend um einen Offsetwert DNE verschoben (Feinsteuerung), um so die vorgegebene Solldrehzahl Nsoll möglichst genau zu erreichen.

Im dargestellten Beispiel wird die Kennlinie B abhängig von der Drosselklappengeschwindigkeit dALPHA/dt um ihren Ursprung gedreht, wie dies in **Fig. 3** durch die Kennlinien D und E kenntlich gemacht ist. Mit steigender Drosselklappengeschwindigkeit dALPHA/dt steigt damit auch die Eingangsdrehzahl NE, die bei vorgegebenem Drosselklappensignal ALPHA erreicht wird.

Damit die Eingangsdrehzahl NE beim vorgegebenen Drosselklappensignal ALPHA die Solldrehzahl Nsoll erreicht, wird zur Eingangsgröße Eingangsdrehzahlsignal NE der Offsetwert DNE hinzuaddiert, so daß das Solldrucksignal nun für die Summe von Eingangsdrehzahlsignal NE und Offsetwert DNE bestimmt wird:

$$PS1 = f(ALPHA, NE+DNE)$$

Der Offsetwert DNE wird bestimmt, indem der zweite Kennlinienwandler 10 zunächst das Eingangsdrehzahlsignal NE ermittelt, das sich nach der Kennlinie B bei dem anliegenden Drosselklappensignal ALPHA einstellen würde (siehe Punkt P1 in Fig. 3) und anschließend die Differenz zu der im ersten Kennlinienwandler 8 ermittelten Solldrehzahl Nsoll (siehe Punkt P2 in Fig. 3) bildet. Im dargestellten Kennfeld wirkt dies wie eine Verschiebung der Kennlinie B zu einer Kennlinie B', die nun am Punkt P2 der einzustellenden Solldrehzahl Nsoll die Kennlinie des ersten Solldrucksignales PS1 für das anliegende Drosselklappensignal ALPHA schneidet.

Die gezeigte Form der Kennlinie B ist ein Beispiel für eine allgemeine Anfahrkennlinie, die in vielfältiger Weise den Bedürfnissen angepaßt werden kann. Wird mittels der Fahraktivität SK eine komfort- oder verbrauchsorientierte Fahrweise erkannt, so kann eine verbrauchsoptimale Kennlinie C verwendet werden, entsprechend einer Linie im Motorkennfeld, die die Punkte minimalen Verbrauches miteinander verbindet. Auch kann die Fahraktivität SK anstelle der Drosselklappengeschwindigkeit dALPHA/dt zur Veränderung der Kennlinie B herangezogen werden; im dargestellten Beispiel entspräche die Kennlinie B einer Fahraktivität SK=1, entsprechend einer komfortablen Fahrweise, die Kennlinie D einer Fahraktivität SK=3, entsprechend einer normalen Fahrweise, und die Kennlinie E einer Fahraktivität SK=5, entsprechend einer sportlichen Fahrweise.

Die **Steuereinrichtung 11** bestimmt aus dem im zweiten Kennlinienwandler 10 erzeugten ersten Solldrucksignal PS1 und zumindest einem gespeicherten Anliegedruck PA ein zweites Solldrucksignal PS2. Der Anliegedruck PA entspricht dem Anliegestellsignal für die Stelleinrichtung 4, das das zweite Solldrucksignal PS2 darstellt, das notwendig ist, um in der Kupplung 2 angeordnete Kupplungsscheiben an dem Punkt zu halten, an dem gerade noch keine Momentenübertragung bzw. kein Kriechmoment auftritt.

Die **Stelleinrichtung 4** erhält das Solldrucksignal PS, das als Summensignal sowohl das von der Steuereinrichtung 11 mit dem zweiten Solldrucksignal PS2 das um den Anliegedruck PA modifizierte erste Solldrucksignal PS1 als auch das von der Regeleinrichtung 9 ermittelte Differenzsolldrucksignal DPS enthält. Hierbei kann der Anliegedruck PA als sytemabhängiger Grundwert, das erste Solldrucksignal PS1 als Vorsteuerwert und das Differenzsolldrucksignal DPS als Feinsteuerwert oder Regelanteil aufgefaßt werden, die in der Summe dann das eigentliche Stellsignal für die Stelleinrichtung 4 bilden.

Die **Regeleinrichtung 9** beinhaltet zwei Regelalgorithmen. In der ersten Phase des Anfahrvorganges bildet die vom ersten Kennlinienwandler 8 ermittelte Solldrehzahl Nsoll die Führungsgröße, der das Eingangsdrehzahlsignal NE nachgeführt wird. Stellgröße ist das Differenzsolldrucksignal DPS, das in Addition mit dem zweiten Solldrucksignal PS2 dem Stellglied 4 zugeführt wird. Diese erste Phase beginnt, wenn das Drosselklappensignal ALPHA einen Grenzwert überschreitet, die Kupplung 2 nicht vollständig geschlossen ist und in einem der Kupplung 2 nachgeschalteten Getriebe des Fahrzeuges eine Anfahrübersetzung (vorwärts oder rückwärts) gewählt ist. Sie endet, wenn das Eingangsdrehzahlsignal NE die Solldrehzahl Nsoll annähernd erreicht hat. Im vorliegenden Beispiel gilt die Solldrehzahl Nsoll als erreicht, wenn das Eingangsdrehzahlsignal NE zumindest 97 % der Solldrehzahl Nsoll erreicht hat. Für den Fall, daß der Fahrer nur langsam beschleunigt und das Drosselklappensignal ALPHA annähernd konstant ist, gilt die erste Phase auch dann als beendet, wenn bei annähernd konstantem Drosselklappensignal ALPHA eine vorgebene Fahrgeschwindigkeit von ca. 5 km/h erreicht wird.

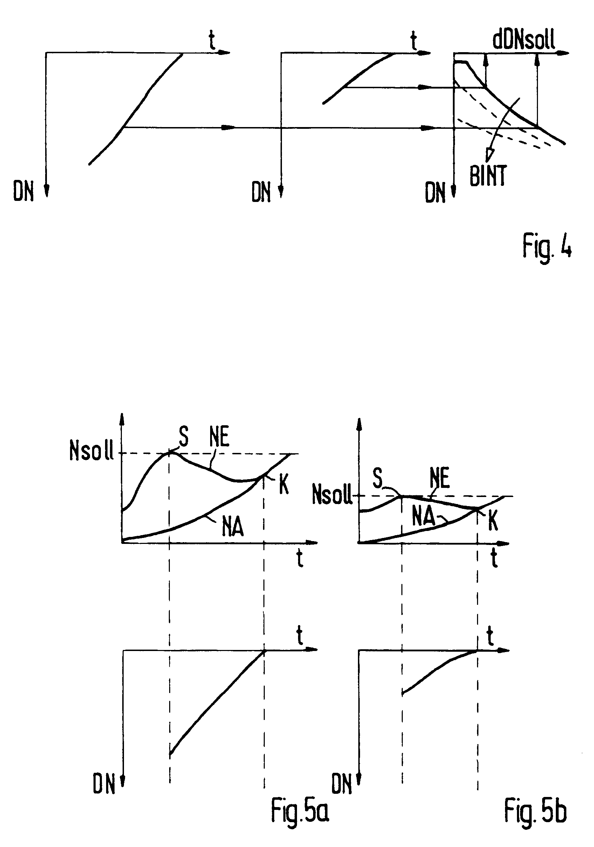

In der sich anschließenden zweiten Phase bildet eine intern erzeugte Solländerung des Differenzdrehzahlsignales dDNsoll die Führungsgröße, der die Änderung des vom Differenzbildner 13 gelieferten Differenzdrehzahlsignales DN nachgeführt wird. Die Solländerung des Differenzdrehzahlsignales dDNsoll wird mittels einer in Figur 4 dargestellten Kennlinie aus dem Differenzdrehzahlsignal DN ermittelt; diese in Figur 4 dargestellte Funktion der Solländerung des Differenzdrehzahlsignales dDNsoll in Abhängigkeit des Differenzdrehzahlsignales DN erzeugt bei großem Differenzdrehzahlsignal DN, d.h. bei großem Schlupf eine große Solländerung des Differenzdrehzahlsignales dDNsoll, die dann mit sinkendem Differenzdrehzahlsignal DN abnimmt, jedoch beim Wert Null des Differenzdrehzahlsignales DN noch einen, wenn auch sehr kleinen, Wert hat. In dieser zweiten Phase bewirkt die Regeleinrichtung 9 das das Differenzdrehzahlsignal DN nach einer durch die Kennlinie vorgegebenen Funktion gegen Null geführt wird. Die zweite Phase endet, wenn die Kupplung 2 vollständig eingerückt ist und damit das Differenzdrehzalsignal DN auf Null abgesunken ist; dies gilt im vorliegenden Beispiel als erreicht, wenn das Differenzdrehzalsignal DN unter den Wert 3% fällt.

Mit dem vollständigen Einrücken der Kupplung 2 ist der Anfahrvorgang abgeschlossen und die Regeleinrichtung 9 gibt nun ein durch einen dritten, nicht näher dargestellten Regelalgorithmus ein zweites Solldrucksignal PS2 an das Stellglied 4 ab, das aus einer Tabelle abhängig vom Betriebspunkt der Antriebsmaschine 3 gewählt ist. Generell wird in diesem sogenannten Leistungsbereich das zweite Solldrucksignal PS2 so groß sein, daß die Kupplung 2 das von der Antriebsmaschine 3 gelieferte Drehmoment sicher übertragen kann, jedoch nicht wesentlich höher.

Die Regeleinrichtung 9 umfaßt neben den beschriebenen Regelalgorithmen auch Überwachungsfunktionen, die zu einem Abbruch des herrschenden Zustandes führen. Folgende Zustände werden zumindest überwacht:

- Wenn während der zweiten Phase des Anfahrvorganges oder im Leistungsbereich in einem Anfahrgang oder im Rückwärtsgang unterhalb einer Geschwindigkeitsschwelle (hier 30 km/h) eine plötzliche Leistungsanforderung erkannt wird, dann wird unverzüglich ein Abbruch eingeleitet und die erste Phase des Anfahrvorganges wird erneut eingeleitet. Eine plötzliche Leistungsanforderung wird hierbei erkannt, wenn das Drosselklappensignal ALPHA um einen mittleren Betrag (hier 30% vom Endwert) in kurzer Zeit (hier innerhalb von 0,5 Sekunden) erhöht wird, und nach der Erhöhung einen hohen Wert (hier 50% vom Endwert) einnimmt. Durch den Abbruch auftretende plötzliche Veränderungen des Solldrucksignales PS2 können durch Filterfunktionen vermindert werden.

- Wenn während der zweiten Phase des Anfahrvorganges Schubbetrieb auftritt, so wird oberhalb einer Fahrgeschwindigkeit von ca. 5 km/h die zweite Phase beendet, hiermit die Kupplung 2 vollständig eingerückt und der Leistungsbereich beginnt. Wird zusätzlich zum Schub noch die Betätigung einer Betriebsbremse des Fahrzeuges erkannt, so wird hingegen die Kupplung 2 unmittelbar geöffnet und nachfolgend die erste Phase des Anfahrvorganges erneut eingeleitet, sobald die Bremse nicht mehr betätigt ist und die Bedingungen zur Einleitung der ersten Phase wieder erfüllt sind.

- wenn im Leistungsbereich das Eingangsdrehzahlsignal unterhalb eines vorgegebenen Wertes NEmin fällt, wobei dieser Wert vorzugsweise im Bereich eines Leerlaufdrehzahlwertes der Antriebsmaschine 3 gewählt ist, wird die Kupplung 2 geöffnet und nachfolgend die erste Phase des Anfahrvorganges erneut eingeleitet, sobald die Bedingungen zur Einleitung der ersten Phase wieder erfüllt sind.

Der vom **Belastungsrechner 12** ermittelte Belastungswert BINT ist ein Maß für die momentane thermische Belastung der Kupplung 2. Die Art der Ermittlung des Belastungswertes BINT ist abhängig von der Größe des Differenzdrehzahlsignales DN. Liegt das Differenzdrehzahlsignal DN oberhalb eines Wertes, der einer Differenzdrehzahl von ca. 20 Umdrehungen pro Minute entspricht, so wird der Belastungswert BINT ermittelt, indem das Drehzahldifferenzsignal DN multipliziert mit der Differenz von Drucksignal P und Anliegedruck PA summiert oder integriert wird. Im anderen Fall wird angenommen, daß die Kupplung 2 geschlossen ist und der Belastungswert BINT wird vermindert. Der Wert, um den der Belastungswert BINT je Zeiteinheit vermindert wird, wurde zuvor in Versuchen ermittelt und stellt eine Kupplungsabkühlfunktion dar. Anstelle einerlinearen Abkühlfunktion kann eine annähernde Berechnung der realen Kühlleistung aus weiteren Betriebsgrößen des Fahrzeuges, wie beispielsweise Eingangsdrehzahlsignal NE, Fahrgeschwindigkeit oder übertragenes Drehmoment treten. Die Verminderung des Belastungswertes BINT wird nur so lange durchgeführt, bis der Belastungswert BINT den Wert Null erreicht hat.

Der Belastungswert BINT wirkt auf den ersten Kennlinienwandler 8, indem die Solldrehzahl Nsoll mit steigendem Belastungswert BINT vermindert wird. Im Ausführungsbeispiel erfolgt diese Verminderung nicht linear mit dem Belastungswert, sondern exponentiell: Während bei kleinen Belastungswerten BINT bis etwa zur Hälfte eines maximalen Belastungswertes BINTmax die Solldrehzahl Nsoll kaum vermindert wird, steigt danach der Einfluß des Belastungswertes BINT und damit die Verminderung der Solldrehzahl Nsoll immer stärker an. Über die Solldrehzahl Nsoll wirkt der Belastungswert BINT auch auf den zweiten Kennlinienwandler 10 und, in der ersten Phase, auf die Regeleinrichtung 9. In der zweiten Phase arbeitet die Regeleinrichtung 9 unabhängig von der Solldrehzahl Nsoll; hier wirkt nun der Belastungswert BINT auf die Regeleinrichtung 9, indem der Zusammenhang zwischen Differenzdrehzahlsignal DN und der Solländerung der Differenzdrehzahl dDNsoll im Sinne eines rascheren Schließens der Kupplung 2 verändert wird. Auch dieser funktionelle Zusammenhang ist wie beim ersten Kennlinienwandler 8 exponentiell ausgebildet.

Die beschriebene Regelvorrichtung 1 wirkt wie folgt:

Die Regelvorrichtung 1, und hierin insbesondere die Regeleinrichtung 9, leitet die erste Phase des Anfahrvorganges ein, wenn das vom Drosselklappengeber 5 erfaßte Drosselklappensignal ALPHA einen Grenzwert überschreitet, die Kupplung 2 nicht vollständig geschlossen ist und in einem der Kupplung 2 nachgeschalteten Getriebe des Fahrzeuges eine Anfahrübersetzung (vorwärts oder rückwärts) gewählt ist. Hierbei ist es unerheblich, ob diese Bedingungen aufgrund eines Anfahrens aus dem Stillstand oder durch Verzögern des Fahrzeuges bis zum Öffnen der Kupplung 2 erreicht werden. Die Leistungsanforderung wird als Drosselklappensignal ALPHA vom Drosselklappengeber 5 erfaßt und an den ersten Kennlinienwandler 8 und den zweiten Kennlinienwandler 10 weitergegeben. Ziel der ersten Phase des Anfahrvorganges ist es, das Eingangsdrehzahlsignal NE und damit die Drehzahl der Antriebsmaschine 3 zu einem Drehzahlsollwert Nsoll hinzuführen.

Zunächst ermittelt der erste Kennlinienwandler 8 aus dem Drosselklappensignal ALPHA, der zeitlichen Änderung des Drosselklappensignales dALPHA/dt sowie der Fahraktivität SK den Motordrehzahlsollwert Nsoll. Dieser wird als Eingangssignal der nachgeschalteten Regeleinrichtung 9 zugeführt. Der Leistungsanforderung folgend erhöht sich die Drehzahl der Antriebsmaschine 3 und entsprechend das Eingangsdrehzahlsignal NE, das ebenfalls der Regeleinrichtung 9 zugeführt wird. Die Regeleinrichtung 9 bestimmt nun aufgrund des in ihr für die erste Phase des Anfahrvorgangs abgespeicherten Regelalgorithmus aus dem Motordrehzahlsollwert Nsoll und dem Eingangsdrehzahlsignal NE das Differenzsolldrucksignal DPS.

Der zweite Kennlinienwandler 10 bestimmt in beschriebener Weise abhängig vom Eingangsdrehzahlsignal NE das erste Solldrucksignal PS1, das nachfolgend in der Steuereinrichtung 11 um den gespeicherten Anliegedruck PA erhöht wird. Das so gebildete zweite Solldrucksignal PS2 und das Differenzsolldrucksignal DPS werden addiert und an das Stellglied 4 ausgegeben, das hiernach die Kupplung 2 betätigt. Als Rückmeldung gibt das Stellglied 4 das Drucksignal P an die Regelvorrichtung 1 aus. So ergibt sich insgesamt eine Vorsteuerung durch den zweiten Kennlinienwandler 10, der das erste Solldrucksignal PS1 abhängig vom Eingangsdrehzahlsignal NE so einstellt, daß der Motordrehzahlsollwert Nsoll im wesentlichen erreicht wird, eine Grundsteuerung durch die Steuereinrichtung 11, die durch Hinzufügen des Anliegedruckes PA Veränderungen in der Kupplung 2 berücksichtigt, und eine Feinregelung durch die Regeleinrichtung 9, die mittels des Differenzsolldrucksignales DPS die Dynamik beeinflußt und dafür sorgt, daß der Motordrehzahlsollwert Nsoll genau erreicht werden kann.

Unabhängig und parallel zu den bisher beschriebenen Vorgängen bestimmt die Belastungsrecheneinheit 10 seit dem Start des Fahrzeuges ständig aus dem Differenzdrehzahlsignal DN und dem Drucksignal P den Belastungswert BINT und gibt diesen an die Kennlinienwandler 8, 10 aus. Der Belastungswert BINT ist damit zu jedem Zeitpunkt ein Maß für die thermische Belastung der Kupplung. Bei erstmaligem Anfahren nach längerem Stillstand hat der Belastungswert BINT den Wert Null, entsprechend einer kalten Kupplung 2. Der Belastungswert BINT hat daher nach längerem Stillstand des Fahrzeuges zunächst keinen Einfluß auf den Anfahrvorgang. Dies gilt auch für eine gering belastete Kupplung 2; erst bei höheren Belastungswerten oberhalb ca. 50 % der thermischen Belastbarkeit der Kupplung 2 beginnt der Einfluß des Belastungswertes BINT spürbar zu werden. Dieser Einfluß ist nachfolgend zunächst nicht berücksichtigt und wird später gesondert beschrieben.

Bei den in **Fig. 5** beispielhaft dargestellten Anfahrvorgängen hat im Punkt S das Eingangsdrehzahlsignal NE den Motordrehzahlsollwert Nsoll im wesentlichen erreicht und die Kupplung 2 ist soweit geschlossen, daß sich die Drehzahl der Antriebsmaschine 3 nicht weiter erhöht (annähernd waagrechte Tangente im Punkt S). Hervorzuheben ist, daß die Antriebsmaschine 3 ausschließlich durch das Leistungssteuerorgan, d.h. durch ihre Drosseklappe und damit durch das Drosselklappensignal ALPHA, und somit durch den Fahrer beeinflußt ist; die Regelvorrichtung 1 wirkt nur über die Kupplung 2 auf die Antriebsmaschine 3 ein. Der im Punkt S erreichte Betriebspunkt der Antriebsmaschine 3 ist damit durch den Fahrer und das Leistungssteuerorgan direkt vorgegeben, während die Regelvorrichtung 1 sich nach Maßgabe der Kennlinienwandler 8, 10 auf diesen Betriebspunkt einstellt.

Am Punkt S wechselt die in der Regeleinrichtung 9 verwendete Regelstrategie, und in beschriebener Weise tritt nun an die Stelle des in die erste Phase als Führungsgröße verwendeten Solldrehzahl Nsoll die Solländerung des Differenzdrehzahlsignales dDNsoll. Ziel dieser zweiten, auch als Schlupfregelung bezeichneten Phase ist es, den durch das Differenzdrehzahlsignal DN dargestellten Schlupf in der Kupplung 2 nach einer vorgegebenen Funktion (**Fig. 4**) gegen Null zu führen und damit die Kupplung 2 vollständig zu schließen. Dadurch wird bei sportlichem Anfahren der Beschleunigungsvorgang mit hoher Dynamik, d.h. starker Beschleunigung durchgeführt und bei normalen Anfahren oder Parkieren stellt sich durch sanftes Anfahren und Beschleunigen ein hoher Komfort ein. Für beide Fälle ist sichergestellt, daß das endgültige Einkuppeln im Kupplungspunkt K sanft und stoßfrei erfolgt.

**Fig. 4** und **Fig. 5** zeigen zwei Anfahrvorgänge (je ein sportlicher (**Fig. 5a**) und ein komfortorientierter (**Fig. 5b**) Anfahrvorgang) nebeneinander im Vergleich. Die beiden Diagramme in **Fig. 5** zeigen den Verlauf des Eingangsdrehzahlsignales NE sowie des Ausgangsdrehzahlsignales NA über der Zeit t. Die beiden korrespondierenden Diagramme in **Fig. 4** zeigen den Verlauf des Differenzdrehzahlsignales DN während der zweiten Phase des Anfahrvorganges über der Zeit.

Bei sportlichem Anfahren ist der Motordrehzahlsollwert durch das große Drosselklappensignal ALPHA und die hohe Änderungsgeschwindigkeit des Drosselklappensignales ALPHA hoch. Im Punkt S hat das Eingangsdrehzahlsignal NE den Motordrehzahlsollwert nahezu erreicht und die Regeleinrichtung 9 wird im folgenden in der zweiten Phase nach der bereits erläuterten Schlupfregelung arbeiten. Zu diesem Zeitpunkt, also zu Beginn der Schlupfregelung ist bei sportlichem Anfahren das Differenzdrehzahlsignal DN sehr groß, da die Antriebsmaschine 3 zügig den Motordrehzahlsollwert Nsoll erreicht hat und das Fahrzeug in dieser Zeit kaum beschleunigt werden konnte (kleines Ausgangsdrehzahlsignal NA). Die Regeleinrichtung 9 erhöht daraufhin zügig das Differenzsolldrucksignal DPS, weil wie in Figur 4 gezeigt, bei hohem Differenzdrehzahlsignal DN die Solländerung des Differenzdrehzahlsignales dDNsoll ebenfalls groß ist. Für den Fahrer wird dies in Form des abfallenden Eingangsdrehzahlsignales NE deutlich und er kann die Leistungsabgabe der Antriebsmaschine 3 erhöhen, sofern der zweite Kennlinienwandler 8 und die Steuereinrichtung 11 es nicht vermögen, das Eingangsdrehzahlsignal NE in der Nähe des Motordrehzahlsollwertes zu halten. Mit fortschreitendem Anfahrvorgang wird das Differenzdrehzahlsignal DN immer kleiner und damit auch die Solländerungsgeschwindigkeit des Differenzdrehzahlsignales dDNsoll geringer. Im Kupplungspunkt K ist die Solländerungsgeschwindigkeit dDNsoll sehr klein, so daß das vollständige Einrücken der Kupplung 2 sanft erfolgen kann. Der sportliche Anfahrvorgang zeichnet sich demnach durch eine hohe Dynamik bzw. eine starke Beschleunigung aus.

Der Extremfall des komfortablen Anfahrens ist das Parkieren, bei dem der Fahrer das Leistungssteuerorgan nur wenig und langsam betätigt. Der Motordrehzahlsollwert Nsoll liegt nun nur geringfügig über der Leerlaufdrehzahl. Damit sind zu Beginn der Schlupfregelung das Differenzdrehzahlsignal DN und auch die Solländerung des Differenzdrehzahlsignales dDNsoll klein und die Solländerungsgeschwindigkeit des Differenzdrehzahlsignales ist sehr klein. Der Abfall des Eingangsdrehzahlsignales NE ist nun kaum noch spürbar, da der zweite Kennlinienwandler 8 und die Steuereinrichtung 11 das Eingangsdrehzahlsignal NE in der Nähe des Motordrehzahlsollwertes halten können, so daß ein Erhöhen der Leistungsanforderung nicht mehr notwendig ist und das Fahrzeug mit schleifender Kupplung 2 und geringer Fahrgeschwindigkeit bewegt werden kann. Erst wenn eine Fahrgeschwindigkeit von ca. 5 km/h überschritten wird, leitet die Regeleinrichtung 9 in beschriebener Weise die zweite phase ein und schließt die Kupplung 2.

Nachfolgend sind die Wirkungen des Belastungswertes BINT auf den Anfahrvorgang beschrieben. Durch den Belastungswert BINT wird der Anfahrvorgang nicht qualitativ, sondern ausschließlich quantitativ verändert. Grundsätzlich gilt, daß mit steigendem Belastungswert BINT die weitere Belastung der Kupplung 2 reduziert werden soll. Dies geschieht, indem durch den Belastungswert BINT der Drehzahlsollwert Nsoll sowie ggf. die Kennlinie der Solländerung des Differenzdrehzahlsignales dDNsoll beeinflußt werden. Die Einflußnahme erfolgt progressiv, so daß sie im Bereich unterhalb ca. 50 % der thermischen Belastbarkeit der Kupplung 2 für den Fahrer kaum spürbar und oberhalb von ca. 50 % der thermischen Belastbarkeit dann schnell zunehmend stärker spürbar wird.

Mit steigendem Belastungswert BINT wird der Drehzahlsollwert Nsoll zurückgenommen, und zu Beginn der zweiten Phase ist das Differenzdrehzahlsignal DN kleiner als bei unbelasteter Kupplung 2. In der zweiten Phase wird die in **Fig. 4** dargestellte Kennlinie in Richtung größerer Solländerungen des Differenzdrehzahlsignales dDNsoll verschoben. Im Ausführungsbeispiel geschieht dies, indem die Solländerung des Differenzdrehzahlsignales DNsoll mit einem zum Belastungswert BINT in funktionellem Zusammenhang stehenden Faktor multipliziert wird. Durch diese Maßnahmen wird im wesentlichen die Belastung der Kupplung 2 durch Verringerung des Schlupfes in der Kupplung 2 sowie durch die Verminderung der Schlupfzeit in geringerem Maße ansteigen.

Mit dem vollständigen Einrücken der Kupplung 2 ist der Anfahrvorgang abgeschlossen und die Regelvorrichtung 1 gibt nun ein durch einen weiteren in der Regeleinrichtung 9 vorgesehenen Algorithmus ermitteltes zweites Solldrucksignal PS2 an das Stellglied 4 ab, das aus einer Tabelle abhängig vom Betriebspunkt der Antriebsmaschine 3 gewählt ist. Generell wird in diesem sogenannten Leistungsbereich das zweite Solldrucksignal PS2 so groß sein, daß die Kupplung 2 das von der Antriebsmaschine 3 gelieferte Drehmoment sicher übertragen kann, jedoch nicht wesentlich höher.

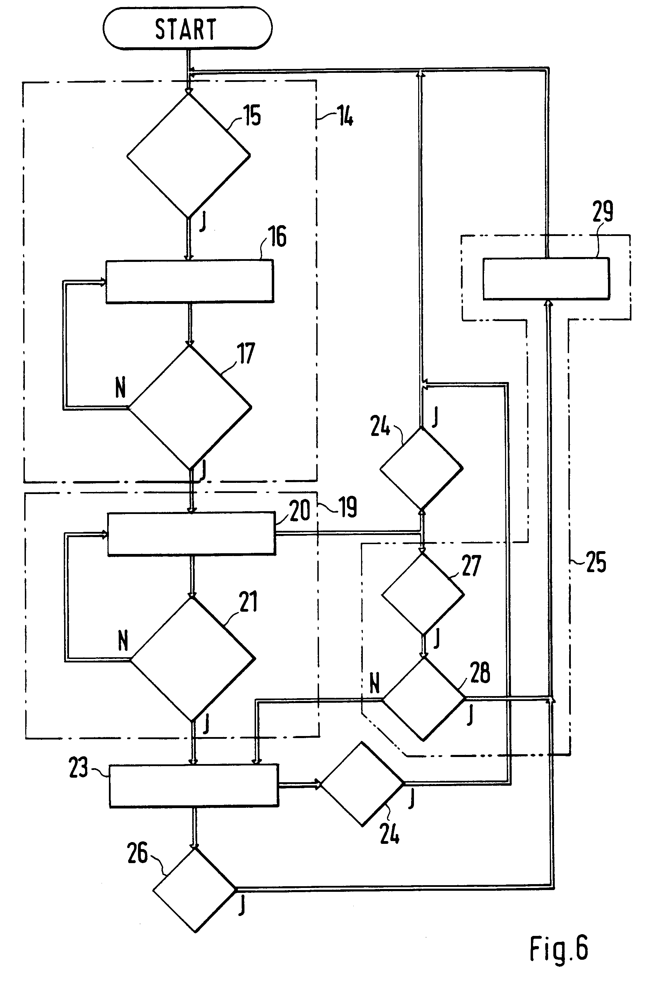

**Fig. 6** zeigt zusammenfassend in einem schematisierten Ablaufdiagramm den Ablauf eines Anfahrvorganges. Außerdem sind in **Fig.6** die schon vorstehend beschriebenen Überwachungsfunktionen der Regeleinrichtung 9 eingetragen. Die mit 14 bezeichnete erste Phase besteht aus einem ersten Schritt 15 zur Überprüfung der Eingangsbedingungen für die erste Phase 14, einem zweiten Schritte 16, in dem von der Regelvorrichtung 1 das Solldrucksignal PS ermittelt wird und einem abschließenden Schritt 17, mit dem das Ende der ersten Phase 14 festgestellt wird. Die in Schritt 15 geprüften Eingangsbedingungen sind:

- das Drosselklappensignal ALPHAüberschreitet einen Grenzwert <u>und</u>
- die Kupplung 2 ist nicht vollständig geschlossen, d.h. das Differenzdrehzahlsignal DN ist ungleich 0 <u>und</u>
- im Getriebe ist eine Anfahrübersetzung gewählt.

In Schritt 16 wird das Solldrucksignal PS als Summensignal aus folgenden Einzelsignalen bestimmt:

- dem ersten Solldrucksignal PS1, das im zweiten Kennlinienwandler 10, wie bspw. durch die Kurve B' in Fig. 3 dargestellt, abhängig vom Motordrehzahlsollwert Nsoll und dem Eingangsdrehzahlsignal NE bestimmt ist,
- dem Anliegedruck PA, der in der Steuereinrichtung 11 gespeichert ist und
- dem Differenzdrucksignal DPS, das von der Regeleinrichtung 9 abhängig von der Abweichung des Eingangsdrehzahlsignales NE vom Motordrehzahlsollwert Nsoll ermittelt wird.

In Schritt 17 wird geprüft, ob

- das Eingangsdrehzahlsignal NE einen Wert von 97 % des Motordrehzahlsollwertes Nsoll erreicht hat <u>oder</u>
- die Fahrgeschwindigkeit des Fahrzeuges 5 km/h erreicht oder überschritten hat.

Nach Vorliegen dieser Bedingungen wird die erste Phase 14 verlassen.

Die zweite Phase 19 besteht aus einem ersten Schritt 20, in dem das Solldrucksignal PS ermittelt wird, sowie einem nachfolgenden Schritt 21, in dem abgefragt wird, ob die zweite Phase 19 verlassen werden kann.

Im Schritt 20 wird hierbei das Solldrucksignal PS als Summensignal aus folgenden Bestandteilen ermittelt:

- dem ersten Solldrucksignal PS1, das im zweiten Kennlinienwandler 10, wie in Fig. 3 dargestellt, abhängig vom Motordrehzahlsollwert Nsoll und dem Eingangsdrehzahlsignal NE bestimmt ist,
- dem Anliegedruck PA, der in der Steuereinrichtung 11 gespeichert ist und
- dem Differenzdrucksignal DPS, das von der Regeleinrichtung 9 abhängig von dem durch das Differenzdrehzahlsignal DN dargestellten Schlupf in der Kupplung 2 nach einer vorgegebenen Funktion (**Fig. 4**) so ermittelt wird, daß das Differenzdrehzahlsignal DN gegen Null geführt und damit die Kupplung 2 vollständig geschlossen wird.

Für die Abfrage in Schritt 21 wird geprüft, ob der Wert des Differenzdrehzahlsignales DN unter 3 % liegt und, wenn dies der Fall ist, die zweite Phase 19 verlassen.

Der Leistungbereich besteht aus Schritt 23, in dem das Solldrucksignal PS in der Regeleinrichtung 9 beispielsweise aus einer Tabelle mit Hilfe der Eingangswerte Drosselklappensignal ALPHA und Eingangsdrehzahlsignal NE bestimmt wird.

Ferner sind als Überwachungsfunktionen eine Erkennung einer plötzlichen Leistungsanforderung 24, eine Schubüberwachung 25 und ein Abwürgeschutz 26 vorgesehen. Die Erkennung einer plötzlichen Leistungsanforderung 24 besteht aus der Prüfung, ob

- das Drosselklappensignal ALPHA innerhalb einer kurzen Zeitspanne (0,5 sec.) wesentlich (um 30 %) erhöht wird <u>und</u>
- der Wert des Drosselklappensignales ALPHA nach der Erhöhung hoch ist (oberhalb von 50% liegt) <u>und</u>
- eine Fahrgeschwindigkeit des Fahrzeuges noch gering ist (30 km/h nicht überschritten sind).

Das Erkennen einer plötzlichen Leistungsanforderung 24 ist jeweils aus dem Schritt 20 und dem Schritt 23 vorgesehen. Wenn die notwendigen Bedingungen erfüllt sind, erfolgt damit sowohl aus der zweiten Phase 19 als auch aus dem Leistungsbereich 23 ein Sprung zum Schritt 15 und damit in die erste Phase 14.

Die Schubüberwachung 25 setzt am Schritt 20 an und prüft zunächst an einem Schritt 27 ob Schub vorliegt. Ist dies der Fall, so wird weiter in Schritt 28 geprüft, ob die Bremse des Fahrzeuges betätigt ist. Ist dies nicht der Fall, so wird in den Leistungsbereich 23 verzweigt. Wenn die Bremse betätigt ist wird hingegen in einen Schritt 29 verzweigt, mit dem die Kupplung 2 vollständig geöffnet wird und aus dem ein Sprung zu Schritt 15 und damit in die erste Phase 14 erfolgt. Hiermit ist es im ersten Fall möglich, im Schubbetrieb die Bremswirkung des Motors auszunutzen, da durch den Übergang in den Leistungsbereich 23 die Kupplung 2 vollständig geschlossen wird, und im zweiten Fall möglich bei einem Bremsmanöver die Antriebsmaschine 3 abzukoppeln, um den Bremsvorgang nicht zu beeinflussen.

Der Abwürgeschutz 26 besteht schließlich aus der Abfrage, ob das Eingangsdrehzahlsignal NE den Leerlaufdrehzahlwert der Antriebsmaschine 3 unterschreitet und, wenn dies der Fall ist, einer Verzweigung zu Schritt 15 und damit in die erste Phase 14.

Generell ist ein Wiederbeginn der Phase 14 nach einer Verzweigung zu Schritt 15 nur dann möglich, wenn die in Schritt 15 aufgezählten Bedingungen erfüllt sind, da anderenfalls Schritt 16 nicht erreicht wird, somit kein Solldrucksignal PS ausgegeben wird und die Kupplung 2 geöffnet bleibt.

Auch im Leistungsbereich ist die Belastungseinheit 10 immer noch aktiv. Wie bereits dargestellt wird hier der Belastungswert BINT langsam in Form einer Abkühlfunktion vermindert, da das Differenzdrehzahlsignal DN eine Differenzdrehzahl kleiner als 20 Umdrehungen pro Minute repräsentiert. Wenn das Fahrzeug nun angehalten wird und die Antriebsmaschine 3 dadurch erneut in den Anfahrbereich gelangt steht auch dann ein Belastungswert BINT zur Verfügung, der die aktuelle thermische Ausnutzung der Kupplung 2 beschreibt. Ein erneuter Anfahrvorgang bei thermisch noch belasteter Kupplung 2 wird nun angepasst an die noch vorhandenen Belastungsreserven der Kupplung 2 ausgeführt werden. D.h. insbesondere, daß die Kupplung 2 schneller eingerückt werden wird und daß die einzustellende Solldrehzahl bei gleicher Stellung des Leistungssteuerorganes geringer sein wird.

Für den Fall, daß der Belastungswert BINT den maximalen Belastungswert BINTmax erreicht, wird die Kupplung 2 vollständig geöffnet. Die darauffolgende Erholungsphase der Kupplung wird mittels der bereits beschriebenen Abkühlfunktion nachgebildet. Sobald der Belastungswert BINT wieder unter einen Warnwert BINTwarn in Höhe von etwa 90 % des maximalen Belastungswertes BINTmax abgesunken ist, kann die Kupplung 2 wieder geschlossen werden und ein Anfahren ist somit wieder möglich. Ein erneuter Anfahrvorgang wird jedoch erst dann eingeleitet, wenn ein eindeutiges Signal des Fahrers vorliegt. Hierzu ist es vorgesehen, daß nach dem Unterschreiten des Warnwertes BINTwarn das Drosselklappensignal ALPHA zumindest einmal den der Leerlaufstellung entsprechenden Wert erreicht haben muß.

Es ist auch möglich anstelle der in **Fig. 3** dargestellten Kennlinie B das erste Solldrucksignal PS1 im zweiten Kennlinienwandler 10 mit Hilfe einer Vorsteuerfunktion zu gewinnen. Hierzu bestimmt der zweite Kennlinienwandler 10 aus dem Drosselklappensignal ALPHA einen Vorsteuerwert A, aus dem dann in einer nicht dargestellten Steuereinrichtung in Verbindung mit dem Eingangsdrehzahlsignal NE das erste Solldrucksignal PS1 gewonnen wird. Dabei bestimmt die Steuereinrichtung das erste Solldrucksignal PS1 ähnlich einer Fliehkraftkupplung proportional mit dem Vorsteuerwert A und progressiv mit dem Eingangsdrehzahlsignal NE. Der progressive Einfluss des Eingangsdrehzahlsignales NE bewirkt mit zunehmender Eingangsdrehzahl ein immer schneller fortschreitendes Einrücken der Kupplung. Der zweite Kennlinienwandler 10 ermittelt den Vorsteuerwert A mit Hilfe der Eingangsgrößen Belastungswert BINT und Drosselklappensignal ALPHA aus einem mehrdimensionalen Kennfeld. Für den Fall, daß nur die genannten Eingangsgrößen verwendet werden, wird der Vorsteuerwert A jedoch in vorteilhafter Weise aus zwei Kennlinien ermittelt, nämlich einer ersten Kennlinie A(BINTmin, ALPHA), die den Vorsteuerwert A als Funktion des Drosselklappenwertes ALPHA für den Fall minimaler Belastung BINT = BINTmin, d.h. BINT ungefähr Null, darstellt und einer zweiten Kennlinie A(BINTmax, ALPHA), die den gleichen Zusammenhang für maximale Kupplungsbelastung BINT = BINTmax angibt. Bei gegebenem Drosselklappenwert ALPHA werden aus den Kennlinien zunächst aus den genannten Kennlinien zwei Vorsteuerwerte A(BINTmax, ALPHA) und A(BINTmin, ALPHA) ermittelt, hieraus die Differenz gebildet und mit dem Verhältnis von aktuellem Belastungswert BINT zu maximalem Belastungswert BINTmax multipliziert. Ein hierdurch ermittelter Differenz-Vorsteuerwert wird zum Vorsteuerwert A(BINTmin, ALPHA) für minimale Kupplungsbelastung hinzuaddiert und schließlich als Vorsteuerwert A ausgegeben. Erreicht aufgrund von an der Kupplung 2 auftretendem Schlupf der Belastungswert BINT an, so steigt sowohl der Vorsteuerwert A und hiermit auch das erste Solldrucksignal PS1 an.

Der Vorsteuerwert A steigt mit wachsendem Drosselklappensignal ALPHA zunächst an, um dann wieder abzufallen. Hierdurch ist erreicht, daß oberhalb des Scheitelpunktes der Vorsteuerwert-Kennlinie die Kupplung 2 weniger stark geschlossen wird, damit wieder stärker rutscht und damit bei höherer Anfahrdrehzahl und höherem Motormoment angefahren werden kann. Nimmt nun der Fahrer in diesem Teil der Vorsteuerwert-Kennlinie die Drosselklappenstellung ALPHA zurück, um beispielsweise den Anfahrvorgang zu verändern oder gar abzubrechen, so würde der Vorsteuerwert A rasch ansteigen und hieraus resultierend die Kupplung 2 durch das Stellglied 4 rasch geschlossen werden. Um den damit verbundenen Ruck zu vermeiden, wird mit einer A-Rücklauffunktion bei Rücknahme des Drosselklappensignales ALPHA und gleichzeitigem Ansteigen des Vorsteuerwertes A dieser so lange konstant gehalten wird, wie sich das Drosselklappensignal ALPHA ändert. Ist das Drosselklappensignal ALPHA wieder innerhalb vorgegebener Grenzen stabil, so wird der Vorsteuerwert A langsam als Funktion der Zeit erhöht, bis der aktuelle Vorsteuerwert A wieder den aus der Kennlinie entnommenen Vorsteuerwert A = f(BINT, ALPHA) erreicht und diese Funktion beendet wird.

Es versteht sich, daß für die beschriebenen Regeleinrichtungen alle bekannten Regelalgorithmen unter Einschluß der Fuzzy-Logik grundsätzlich verwendbar sind; für die Wahl eines speziellen Regelalgorithmus sind dann die näheren Randbedingungen der Regeleinrichtung zu beachten.

Zur Steigerung des Bedienkomforts und zur Erhöhung der Betriebssicherheit eines mit der erfindungsgemäßen Regelvorrichtung 1 ausgerüsteten Fahrzeuges sind in dieser ergänzend die nachfolgend beschriebenen Funktionen vorgesehen, die in der Regel von der Steuervorrichtung 11 ausgeführt werden.

Um den Fahrer auf die Ausschöpfung der Belastungsreserven der Kupplung 2 hinzuweisen, ist eine **akustische Warnfunktion** vorgesehen. Diese wird aktiviert, wenn der Belastungswert BINT den Warnwert BINTwarn erreicht oder überschritten hat. Ist dies der Fall, so wird ein periodischer Warnton erzeugt, dessen Wiederholfrequenz mit wachsendem Belastungswert BINT weiter ansteigt. Erreicht der Belastungwert BINT den maximalen Belastungswert BINTmax, so wird parallel zum Öffnen der Kupplung 2 ein Dauer-Warnton erzeugt, der so lange aufrecht erhalten wird, bis der Belastungswert BINT wieder unter den Warnwert BINTwarn abgesunken ist. Ein Aussetzen des Dauer-Warntones weist gleichzeitig darauf hin, daß die Kupplung 2 nun wieder geschlossen werden kann und somit ein Anfahren wieder möglich ist.

Wie soeben beschrieben, wird die Kupplung 2 unbedingt geöffnet, wenn der Belastungswert BINT den Grenzwert BINTmax erreicht oder überschreitet. In diesem Fall hat der Fahrer keinen Einfluß auf die Kupplung 2, so daß dadurch das Fahrzeug teilweise dem Einfluß des Fahrers entzogen ist. Da das daraus resultierende Verhalten des Fahrzeuges, selbst bei vorausgegangener akustischer Warnung des Fahrers durch die oben beschriebene Warnfunktion, für den Fahrer immer vorhersehbar ist und andererseits nicht sichergestellt ist, daß der Fahrer in angemessener Weise und für andere Verkehrsteilnehmer vorhersehbar reagiert, ist für diesen Fall des Öffnens der Kupplung 2 aufgrund des Belastungswertes BINT eine **Haltefunktion** vorgesehen. Diese Haltefunktion betätigt automatisch Einrichtungen des Fahrzeuges, die verhindern, daß sich das Fahrzeug bewegt. Dies sind im Ausführungsbeispiel Bremseinrichtungen des Fahrzeuges, die in Verbindung mit einer im Fahrzeug vorgesehenen automatischen Bremseinrichtung (Antiblockiersystem) betätigt werden. Es ist in gleicher Weise möglich, beispielsweise eine Parksperre oder ähnliche Mittel anzusteuern.

Die Haltefunktion wird beendet, wenn aufgrund des absinkenden Belastungswertes BINT die Kupplung 2 wieder geschlossen werden kann und der Fahrer aktiv Gas gibt.

Da die Wirkelemente der Kupplung 2 und das Stellelement 4 über die Betriebsdauer hinweg keine konstante Wirkung zeigen, sondern sich ihre Wirkung je nach Betriebsbedingungen und Verschleiß verändert, wird in einer weiteren **Funktion zur Anliegedruckerkennung** der Anliegedruck PA immer wieder unter bestimmten Bedingungen ermittelt und, auch über den Stillstand des Fahrzeuges bzw. ein Abstellen des Fahrzeuges hinaus, gespeichert. Die Anliegedruckerkennung versucht den Anliegedruck PA so zu ermitteln, daß die Kupplung 2 nahe am Schleifpunkt betrieben wird. So kann die Kupplung 2 beim Anfahren gleich greifen, ohne erst einen störenden Leerweg durchfahren zu müssen.

Der Anliegedruck PA wird unter folgenden Bedingungen ermittelt:

- die Bremse des Fahrzeuges ist betätigt und
- das Drosselklappensignal ALPHA ist annähernd Null und
- die Fahrgeschwindigkeit des Fahrzeuges ist annähernd Null und
- das Eingangsdrehzahlsignal NE ist kleiner als der vorgegebener, etwas oberhalb der Leerlaufdrehzahl der Antriebsmaschine 3 liegender Grenzwert NEmin und
- die Anfahrübersetzung oder der Rückwärtsgang ist an einem Getriebe des Fahrzeuges eingelegt.

Die Steuervorrichtung 11 gibt bei Vorliegen dieser Bedingungen zunächst ein zweites Solldrucksignal PS2 ab, das so weit unter dem bisher gespeicherten Anliegedruck PA liegt, daß die Kupplung 2 sicher geöffnet wird. Im Ausführungsbeispiel ist dies durch die Verwendung eines vorgegebenen Wertes für den Anliegedruck PA realisiert; mit gleicher Wirkung ist es auch möglich, z.B. den zuletzt gespeicherten Anliegedruck PA zu halbieren oder den zuletzt gespeicherten Anliegedruck PA um einen festen Betrag zu vermindern. Anschließend wird das zweite Solldrucksignal PS2 in kleinen Stufen erhöht; nach jeder Erhöhung isteine Wartezeit vorgesehen, um die Reaktion der Kupplung 2 und damit des Eingangsdrehzahlsignales NE abzuwarten. Liegt die Erhöhung des aktuellen Eingangsdrehzahlsignalwertes NE gegenüber dem zu Beginn der Anliegedruckerkennung herrschenden und zwischengespeicherten Eingangsdrehzahlsignalwert NE unterhalb einer vorgegebenen Schwelle, so wird das Solldrucksignal wiederum erhöht. Dies wird solange fortgeführt, bis sich das Eingangsdrehzahlsignal NE um zumindest einen vorgegebenen Betrag vermindert hat. Das zweite Solldrucksignal PS2 wird um einen geringfügigen Betrag zurückgenommen, als neuer Anliegedruck PA zwischengespeichert und es wird geprüft, ob das Eingangsdrehzahlsignal NE in den Bereich der zu Beginn der Anliegedruckerkennung herrschenden und zwischengespeicherten Drehzahl zurückkehrt. Ist dies der Fall, so wird erneut der soeben ermittelte neue Anliegedruck PA als zweites Solldrucksignal PS2 ausgegeben und endgültig gespeichert. An die Stelle des Drehzahlabfalles tritt bei leerlaufdrehzahlgeregelten Systemen die Überwachung auf ein Ansteigen der Einspritzzeiten um ein vorgegebenes Maß.

Die Bestimmungen des Anliegedruckes PA wird abgebrochen, sobald eine der vorgenannten Bedingungen verletzt ist. Konnte die Anliegedruckerkennung erfolgreich abgeschlossen werden, so wird sie erst nach dem Verlassen und erneuten Erreichen des Anfahrbereiches wiederholt.

Um im Stillstand des Fahrzeuges eine unnötige Kupplungsbelastung, wie sie beim Betrieb der Kupplung 2 nahe des Schleifpunktes unumgänglich ist, zu vermeiden, ist eine **Standabkopplungs-Funktion** vorgesehen, die bei bestimmten Voraussetzungen das zweite Solldrucksignal PS2 an das Stellglied 4 um einen vorgegebenen Betrag reduziert. Diese Bedingungen sind:

- Die Bremse des Fahrzeuges ist betätigt und
- das Drosselklappensignal ALPHA ist annähernd Null und
- die Fahrgeschwindigkeit des Fahrzeuges ist nahezu Null (v < 3 km/h) und
- die Anfahrübersetzung oder der Rückwärtsgang ist an einem Getriebe des Fahrzeuges eingelegt.

Durch diese Bedingung ist sichergestellt, daß die Funktion nur dann ausgeführt wird, wenn sich das Fahrzeug im Stillstand befindet und kurzfristig kein Anfahrvorgang zu erwarten ist. Das Stellglied 4 wird so lange mit dem verminderten zweiten Solldrucksignal PS2 angesteuert, wie folgendeBedingungen erfüllt sind:

- Die Bremse des Fahrzeuges ist betätigt und
- das Drosselklappensignal ALPHA ist annähernd Nulll.

Um generell, und insbesondere beim Abbruch der im vorhergehenden Absatz beschriebenen Standabkoppelungs-Funktion, ein schnelles Ansprechen der Kupplung 2 sicherzustellen, wird in einer Funktion zum Anlegen der Kupplung 2 unter gewissen Bedingungen das Stellglied 4 mit einem kurzen **Stellimpuls Si** beaufschlagt. Dieser Stellimpuls Si ist im Ausführungsbeispiel eine kurzzeitige Erhöhung des zweiten Solldrucksignales PS2 um einen vorgegebenen Wert, wobei die Größe und die Länge dieses Impulses abhängig von Betriebsgrößen des Stellgliedes 4 und der Kupplung 2 so eingestellt werden, daß ein oben beschriebender Betrieb der Kupplung 2 nahe des Schleifpunktes sicher erreicht wird. Vorzugsweise sind daher die Sollwerte für Impulsdauer und Impulshöhe in einem Kennfeld abhängig von den Betriebsgrößen gespeichert.

Der Stellimpuls Si wird unter folgenden Bedingungen ausgelöst:

- Die Bremse des Fahrzeuges wurde gelöst und war zuvor zumindest eine vorgegebene Zeit lang, im Ausführungsbeispiel ca. 1,5 sec, betätigt und
- die Fahrgeschwindigkeit des Fahrzeuges ist annähernd Null und
- das Eingangsdrehzahlsignal NE liegt unterhalb eines vorgegebenen Wertes NEmin, wobei dieser Wert klein, vorzugsweise etwas oberhalb eines Leerlaufdrehzahlwertes der Antriebsmaschine 3, gewählt ist und
- seit einem vorausgegangenen Stellimpuls Si ist zumindest eine vorgegebene Zeitspanne, im Ausführungsbeispiel ca. 1,5 sec, vergangen. In der Regel wird sich der Stellimpuls Si an die vorausgehend beschriebene Standabkopplungs-Funktion anschließen; dies ist nur dann nicht der Fall, wenn die Standabkopplungs-Funktion verlassen wurde, weil die Bedingungen über den eingelegten Getriebegang verletzt wurde oder wenn bei Verlassen der Standabkopplung die Drehzahl bereits über den vorgegebenen Wert angestiegen ist.

An Gefällen oder unter ähnlichen Bedingungen in anderen Situationen kann das Fahrzeug bei gelöster Bremse losrollen, ohne daß die Drosselklappe der Antriebsmaschine 3 geöffnet wird. Da in diesem Falle das Eingangsdrehzahlsignal NE und das Drosselklappensignal ALPHA annähernd Null ist, kann das Fahrzeug anrollen, ohne daß die Kupplung 2 geschlossen wird und damit die Antriebsmaschine 3 als bremsendes Element hinzutritt. Zur Verhinderung dieses sogenannte Freilaufes ist es in einer **Freilauf-Funktion** vorgesehen, bei Vorliegen bestimmter Bedingungen das Stellglied 4 im Sinne eines Schließens der Kupplung 2 anzusteuern.

Es gelten hierbei folgende Bedingungen für das Auslösen dieser Funktion:

- das Drosselklappensignal ALPHA ist annähernd Null und
- das Eingangsdrehzahlsignal ist kleiner als ein vorgegebener, etwas oberhalb der Leerlaufdrehzahl der Antriebsmaschine 3 liegender Grenzwert NEmin und
- das Ausgangsdrehzahlsignal NA ist größer als das Eingangsdrehzahlsignal NE und
- in dem der Kupplung 2 nachgeschalteten Getriebe ist die Anfahrübersetzung, z.B. der erste Getriebegang, oder der Rückwärtsgang eingelegt und
- keine andere Zusatzfunktion ist aktiv.

Die Funktion wird beendet, wenn

- das Drosselklappensignal ALPHA größer als ungefähr Null oder
- das Ausgangsdrehzahlsignal NA kleiner als der Grenzwert NEmin ist oder
- ein anderer als die genannten Gänge des Getriebes eingelegt wird.

Die im Ausführungsbeispiel beschriebene Anfahrsteuerung ist für einen normalen Anfahrbereich ausgelegt. Der beschriebene und in **Fig. 4** dargestellte Kick-Down-Bereich ermöglicht darüber hinaus **Sonderanfahrten** mit erhöhter Leistung. Sonderanfahrten mit hoher Motordrehzahl zur Ausnutzung des Schwungmomentes der Antriebsmaschine 3 im Sinne einer kurzzeitigen Überhöhung des Antriebsmomentes bedürfen, nicht zuletzt aus Sicherheitsgründen, einer gesonderten Anfahrstrategie. Während bei normalen Anfahrten das Eingangsdrehzahlsignal NE der in **Fig. 3** gezeigten Kennlinie B nachgeführt wurde, verläuft diese Kennlinie für die Sonderanfahrt-Funktion zunächst deutlich flacher und im Bereich der Solldrehzahl Nsoll dann deutlich steiler noch jenseits der Kennlinie E. Dementsprechend sind die Parameter der Regeleinrichtung 9 für die erste Phase des Anfahrvorganges nun so ausgelegt, daß der Eingriff der Regeleinrichtung 9 später, jedoch dann mit höherem Differenzsolldrucksignal DS erfolgt. Hierdurch kann die Antriebsmaschine 3 zunächst nahezu frei hochdrehen; dies ist insbesondere bei turboaufgeladenen Motoren von Bedeutung. Erreicht die Motordrehzahl damit das Eingangsdrehzahlsignal NE die Nähe der Solldrehzahl Nsoll, so greift die Regeleinrichtung 9 ein, indem die Kupplung 2 rasch und damit vergleichsweise hart geschlossen wird. Durch diese Maßnahme wird der Schwungmoment der drehenden Massen der Antriebsmaschine 3 ausgenutzt.

Für den Einstieg in die Sonderanfahrt-Funktion ist es wesentlich, daß diese Funktion nur durch ein bewußtes Signal des Fahrers ausgelöst werden kann. Ein solches Signal kann beispielsweise über ein Festbremsen des Fahrzeuges bei gleichzeitigem hohen Drosselklappensignal ALPHA oder durch ein Betätigen eines auf einem Getriebeschalthebel oder einem Handbremsbedienelement angeordneten Schalters erfolgen.

**Patentansprüche**

1. Verfahren zur Anfahrsteuerung eines Kraftfahrzeugantriebes, bestehend aus einer Antriebsmaschine (3) und einem der Antriebsmaschine nachgeschalteten, als Anfahreinrichtung wirkenden Kennungswandler (2), bei dem zur Ansteuerung der Anfahreinrichtung (2) die Größen:

   - Stellung des Leistungssteuerorganes (ALPHA) der Antriebsmaschine (3),
   - Eingangsdrehzahl (NE) der Anfahreinrichtung (2) und
   - Ausgangsdrehzahl (NA) der Anfahreinrichtung (2),
     herangezogen werden und der Anfahrvorgang in zumindest 2 Phasen durchgeführt wird, **dadurch gekennzeichnet, daß**
   - in einer ersten Phase des Anfahrvorganges die Eingangsdrehzahl (NE) zu einer Solldrehzahl (Nsoll) hingeführt wird und
   - in einer sich anschließenden zweiten Phase des Anfahrvorganges ein aus der Differenz zwischen Eingangsdrehzahl (NE) und Ausgangsdrehzahl (NA) gebildetes Differenzdrehzahlsignal (DN) einem Sollverlauf bis zum Wert Null nachgeführt wird.

2. Verfahren nach Anspruch 1, **dadurch gekennzeichnet**, daß in der ersten Phase, die beginnt, wenn die Anfahreinrichtung nicht vollständig geschlossen ist und die Stellung des Leistungssteuerorganes (ALPHA) unterhalb eines Grenzwertes liegt,

   - zunächst die Solldrehzahl (Nsoll) abhängig von der Stellung des Leistungssteuerorganes (ALPHA) bestimmt wird,
   - dann eine Sollkurve (B) eines ersten Stellsignales (PS1) für ein Stellglied (4) der Anfahreinrichtung (2) so bestimmt wird, daß bei der aktuellen Stellung des Leistungssteuerorganes (ALPHA) die Solldrehzahl (Nsoll) erreicht wird und

   - anschließend das ersten Stellsignales (PS1) abhängig von der Stellung des Leistungssteuerorganes (ALPHA) und dem Eingangsdrehzahlsignal (NE) nach der Sollkurve so bestimmt und eingestellt wird, daß sich das Eingangsdrehzahlsignal (NE) der Solldrehzahl (Nsoll) annähert.

3. Verfahren nach Anspruch 2, **dadurch gekennzeichnet**, daß die Solldrehzahl (Nsoll) abhängig von der Stellung des Leistungssteuerorganes (ALPHA), der zeitlichen Änderung der Stellung des Leistungssteuerorganes (ALPHA) und einem den Fahrstil des Fahrers beschreibenden Signal (SK) bestimmt wird.

4. Verfahren nach Anspruch 2, **dadurch gekennzeichnet**, daß die Stelleinrichtung (4) mit einem Solldrucksignal (PS) beaufschlagt wird, das aus der Summe eines sytemabhängigen Anlagestellsignales (PA), dem ersten Stellsignal (PS1) sowie eines Differenzstellsignales (DPS) gebildet wird.

5. Verfahren nach Anspruch 1, **dadurch gekennzeichnet**, daß daß in der zweiten Phase, die beginnt, wenn die Differenz zwischen dem Eingangsdrehzahlsignal (NE) und der Solldrehzahl (Nsoll) unterhalb eines Grenzwertes liegt oder eine vorgegebene Mindest-Fahrzeuggeschwindigkeit erreicht ist,

   - ein Differenzstellsignal (DPS) so bestimmt wird, daß eine Solländerung des Differenzdrehzahlsignales (dDNsoll) abhängig von dem Differenzdrehzahlsignal (DN) nach einer Sollkurve gegen den Wert Null geführt wird, wobei die Sollkurve mit sinkendem Differenzdrehzahlsignal (DN) sinkende Solländerungen (dDNsoll) ausweist.

6. Verfahren nach Anspruch 1, **gekennzeichnet durch die Schritte**

   - Erfassen des von der Anfahreinrichtung (2) übertragenen Drehmomentes (M),
   - Ermitteln eines Belastungswertes (BINT) der Anfahreinrichtung (2) aus der Eingangsdrehzahl (NE), der Ausgangsdrehzahl (NA) und dem Drehmoment (M),
   - Bestimmen der Solldrehzahl (Nsoll) abhängig von der Stellung des Leistungssteuerorganes (ALPHA) und dem Belastungswert (BINT).

7. Verfahren nach Anspruch 6, **gekennzeichnet durch die Schritte**

   - Bestimmen des Belastungswertes (BINT) als Produkt aus Drehmoment (M) und der Differenz des Eingangsdrehzahlsignales (NE) und des Ausgangsdrehzahlsignales (NA), wenn die Drehzahldifferenz einen Grenzwert überschreitet und anderenfalls

- Bestimmen des Belastungswertes (BINT) durch Vermindern nach einer vorgegebenen Funktion.

8. Verfahren nach Anspruch 6 oder 7, **dadurch gekennzeichnet**, daß durch eine Warnfunktion ein Warnsignales abgegeben wird, sobald der Belastungswert (BINT) einen vorgegebenen Teil eines maximalen Belastungswertes (BINTmax) erreicht hat, wobei das abgegebene Warnsignal durch die Größe des Belastungswertes (BINT) moduliert wird, und die Anfahreinrichtung (2) geöffnet wird, sobald der Belastungswert (BINT) den maximalen Belastungswert (BINTmax) erreicht oder überschreitet.

9. Verfahren nach Anspruch 8, **dadurch gekennzeichnet**, daß durch eine Haltefunktion eine Halteeinrichtung, die das Fahrzeug am Rollen hindert, aktiviert wird, sobald die Anfahreinrichtung (2) aufgrund des Erreichens oder Überschreitens des maximalen Belastungswertes (BINTmax) geöffnet wird und die Halteeinrichtung deaktiviert wird, sobald der Belastungswert (BINT) den maximalen Belastungswert (BINTmax) unterschreitet und die Stellung des Leistungssteuerorganes (ALPHA) auf ein Betätigen des Leistungssteuerorganes schließen läßt.

10. Verfahren nach Anspruch 1, **dadurch gekennzeichnet**, daß in einer Funktion zur Anliegedrukkerkennung zur Bestimmung eines Anlagestellsignales (PA) die Stelleinrichtung (4) im Sinne des Schließens der Anfahreinrichtung (2) angesteuert wird, wenn

- eine Bremse betätigt ist und
- die Stellung des Leistungssteuerorganes (ALPHA) auf ein unbetätigtes Leistungssteuerorgan schließen läßt und
- eine Fahrgeschwindigkeit annähernd Null ist und
- das Eingangdrehzahlsignal (NE) unterhalb einer vorgegebenen, geringen Schwelle liegt und
- in einem der Anfahreinrichtung (2) nachgeschalteten Drehmomentwandler eine Anfahrübersetzung gewählt ist, wobei ein zweites Stellsignal (PS2) für ein Stellglied (4) der Anfahreinrichtung (2) zunächst soweit vermindert wird, das die Anfahreinrichtung (2) sicher geöffnet ist, das zweite Stellsignal (PS2) dann stufenweise erhöht wird, bis das Eingangsdrehzahlsignal (NE) um einen vorgegebenen Wert abgefallen ist oder eine Einrichtung zur Stabilisierung des Eingangsdrehzahlsignales (NE) ein Nachstellen aufgrund eines Abfalles des Eingangsdrehzahlsignales (NE) meldet, und anschließend das zu diesem Zeitpunkt vorliegende und um einen vorgegebenen Betrag verminderte zweite Stellsignal (PS2) des Stellgliedes (4) als Anlagestellsignal (PA) gespeichert wird.

11. Verfahren nach Anspruch 10, **dadurch gekennzeichnet**, daß nach jeder stufenweisen Erhöhung des zweiten Stellsignal (PS2) eine Wartezeit eingelegt wird, das Ansteuern der Stelleinrichtung (4) abgebrochen wird, sobald eine der eingangs genannten Bedingungen nicht mehr erfüllt ist und nach dem Speichern des um einen vorgegebenen Betrag verminderten zweiten Stellsignales (PS2) dieses zunächst an die Stelleinrichtung (4) ausgegeben wird und erst wenn sich daraufhin das ursprüngliche Eingangsdrehzahlsignal (NE) einstellt bzw. die Einrichtung zur Stabilisierung des Eingangsdrehzahlsignales (NE) kein Nachstellen mehr meldet als Anlagestellsignal (PA) gespeichert wird.

12. Verfahren nach Anspruch 1, **dadurch gekennzeichnet**, daß in einer Standabkopplungs-Funktion das an das Stellelement (4) abgegebene zweite Stellsignal (PS2) um einen vorgegebenen Betrag vermindert wird, wenn

- eine Bremse des Fahrzeuges für eine vorgegebene Zeit aktiv war und dann gelöst wurde und
- eine Fahrgeschwindigkeit annähernd Null ist und
- in einem der Anfahreinrichtung (2) nachgeschalteten Drehmomentwandler eine Anfahrübersetzung gewählt ist.

13. Verfahren nach Anspruch 1, **dadurch gekennzeichnet**, daß in einer Funktion zum Anlegen der Anfahreinrichtung (2) ein Stellimpuls (Si) an das Stellelement (4) abgegeben wird, wenn

- eine Bremse des Fahrzeuges gelöst wird und
- das Ausgangsdrehzahlsignal (NA) gering ist und
- das Eingangsdrehzahlsignal (NE) unterhalb eines vorgegebenen, kleinen Wertes liegt und
- seit der vorhergehenden Abgabe des Stellimpulses (Si) eine vorgegebene Zeitspanne vergangen ist, wobei der Stellimpuls (Si) so bemessen ist, daß in der Anfahreinrichtung (2) vorhandene Leerwege überwunden werden.

14. Verfahren nach Anspruch 1, **dadurch gekennzeichnet**, daß in einer Freilauf-Funktion zur Verhinderung des Losrollens die Stelleinrichtung (4) im Sinne des Schließens der Anfahreinrichtung (2) angesteuert wird, wenn

- die Stellung des Leistungssteuerorganes (ALPHA) annähernd Null ist und
- in einem der Anfahreinrichtung (2) nachgeschalteten Drehmomentwandler eine Anfahrübersetzung gewählt ist und
- das Eingangsdrehzahlsignal (NE) höchstens etwas oberhalb der Leerlaufdrehzahl der Antriebsmaschine (3) liegt und
- das Ausgangsdrehzahlsignal (NA) größer als das mit der eingestellten Übersetzung bewertete Eingangsdrehzahlsignal (NE) ist.

15. Verfahren nach Anspruch 2, **dadurch gekennzeichnet**, daß in einer Sonderanfahrt-Funktion auf ein besonderes Anforderungssignal des Fahrers des Kraftfahrzeuges hin eine besondere Sollkurve des ersten Stellsignales (PS1) gewählt wird, die gegenüber den gewöhnlich benutzten Sollkurven (B) zunächst einen deutlich geringeren Anstieg des ersten Stellsignales (PS1) und in der Nähe der Solldrehzahl dann einen sehr raschen Anstieg des ersten Stellsignales (PS1) über dem Eingangsdrehzahlsignal vorsieht.

16. Verfahren nach Anspruch 15, **dadurch gekennzeichnet**, daß als besonderes Anforderungssignal entweder eine Betätigung einer Bremse des Fahrzeuges bei gleichzeitigem hohen Drosselklappensignal (ALPHA) oder ein Betätigen gesondert angeordneten Schalters ist.

17. Steuervorrichtung (1) für eine Antriebsmaschine (3) und einem der Antriebsmaschine nachgeschalteten, als Anfahreinrichtung wirkenden Kennungswandler (2) mit

- einem Geber (5) für die Stellung des Leistungssteuerorganes (ALPHA) der Antriebsmaschine (3),
- einem Geber (6) für ein Eingangsdrehzahlsignal (NE) der Anfahreinrichtung (2),
- einem Geber (7) für ein Ausgangsdrehzahlsignal (NA) der Anfahreinrichtung (2), **gekennzeichnet durch**
- einen Differenzbildner (13) zur Bestimmung eines Differenzdrehzahlsignales (DN) als Differenz zwischen Eingangsdrehzahlsignal (NE) und Ausgangsdrehzahlsignal (NA),
- einen ersten Kennlinienwandler (8) zur Bestimmung einer Solldrehzahl (Nsoll) abhängig vom Signal (ALPHA) des ersten Gebers (5),
- eine Regeleinrichtung (9), die Signale sowohl des Gebers (6) für die Eingangsdrehzahl (NE) wie auch des ersten Kennlinienwandlers (8) zur Bestimmung einer Solldrehzahl ($N_{soll}$) erhält und die in einer ersten Phase des Anfahrvorganges ein Differenzstellsignal (DPS) so erzeugt, daß das Eingangsdrehzahlsignal (NE) zum Solldrehzahlsignal (Nsoll) hingeführt wird und in einer zweiten Phase das Differenzstellsignal (DPS) so erzeugt, daß das Differenzdrehzahlsignal (DN) sich mit einer von der Größe des Differenzdrehzahlsignales (DN) abhängigen Geschwindigkeit (dDN/dt) ändert,
- einen zweiten Kennlinienwandler (10) zur Bestimmung eines ersten Stellsignales (PS1) abhängig von der Stellung des Leistungssteuerorganes (ALPHA), dem Eingangsdrehzahlsignal (NE) und der Solldrehzahl (Nsoll),
- eine Steuereinrichtung (11) zur Bestimmung eines zweiten Stellsignales (PS2) aus dem ersten Stellsignal (PS1) und einem Anliegestellsignal (PA), bei dem der Kennungswandler gerade noch kein Moment überträgt und eine nach Maßgabe der Summe aus zweitem Stellsignal (PS2) und Differenzstellsignal (DPS) auf die Anfahreinrichtung (2) wirkenden Stelleinrichtung (4).

18. Vorrichtung nach Anspruch 17, **dadurch gekennzeichnet,** daß der zweite Kennlinienwandler (11) die Solldrehzahl (Nsoll) abhängig von der Stellung des Leistungssteuerorganes (ALPHA), der Änderung dieses Signales und einem den Fahrstil des Fahrers beschreibenden Signal (SK) bestimmt.

**Claims**

1. A method for the starting control of a motor vehicle drive, comprising a driving engine (3) and an identification code converter (2), connected on the output side of the driving engine and acting as a starting means, wherein the variables:

- position of the performance control element (ALPHA) of the driving engine (3),
- input speed (NE) of the starting means (2) and
- output speed (NA) of the starting means (2) are used to activate the starting means (2), and the starting operation is implemented in at least 2 phases, characterised in that
- in a first phase of the starting operation the input speed (NE) is brought to a set speed (Nsoll) and
- in a following, second phase of the starting operation a differential speed signal (DN), formed from the difference between the input speed (NE) and the output speed (NA), follows a set curve to the value zero.

2. A method according to claim 1, characterised in that in the first phase, which begins when the starting means is not fully closed and the position of the performance control element (ALPHA) is below a limit value,

- the set speed (Nsoll) is first determined in dependence on the position of the performance control element (ALPHA),
- then a set curve (B) of a first actuating signal (PS1) for an actuator (4) of the starting means (2) is determined such that, at the current position of the performance control element (ALPHA), the set speed (Nsoll) is reached and
- the first actuating signal (PS1) is then determined and adjusted in dependence on the position of the performance control element (ALPHA) and the input speed signal (NE) in accordance with the set curve such that the input speed signal (NE) approximates the set speed (Nsoll).

3. A method according to claim 2, characterised in that the set speed (Nsoll) is determined in dependence on the position of the performance control element (ALPHA), the change over time of the position of the performance control element (ALPHA) and a signal (SK) describing the driving style of the driver.

4. A method according to claim 2, characterised in that the actuating means (4) is acted upon with a set pressure signal (PS) which is formed from the sum of a system-dependent system actuating signal (PA), the first actuating signal (PS1) and also a differential actuating signal (DPS).

5. A method according to claim 1, characterised in that in the second phase, which begins when the difference between the input speed signal (NE) and the set speed (Nsoll) is below a limit value or a predetermined minimum vehicle speed is reached,

- a differential actuating signal (DPS) is determined such that a set variation of the differential speed signal (dDNsoll) in dependence on the differential speed signal (DN) is brought in accordance with a set curve towards the value zero, the set curve exhibiting decreasing set variations (dDNsoll) with the decreasing differential speed signal (DN).

6. A method according to claim 1, characterised by the steps

- detecting of the torque (M) transmitted by the starting means (2),
- ascertaining of a load value (BINT) of the starting means (2) from the input speed (NE), the output speed (NA) and the torque (M),
- determining of the set speed (Nsoll) in dependence on the position of the performance control element (ALPHA) and the load value (BINT).

7. A method according to claim 6, characterised by the steps

- determining of the load value (BINT) as the product of the torque (M) and the difference of the input speed signal (NE) and the output speed signal (NA), when the speed difference exceeds a limit value, and, in the contrary case
- determining of the load value (BINT) by decreasing it in accordance with a predetermined function.

8. A method according to claim 6 or 7, characterised in that a warning signal is issued by means of a warning function as soon as the load value (BINT) has reached a predetermined part of a maximum load value (BINTmax), the issued warning signal being modulated by the magnitude of the load value (BINT), and the starting means (2) being opened as soon as the load value (BINT) reaches or exceeds the maximum load value (BINTmax).

9. A method according to claim 8, characterised in that a holding means which prevents the vehicle from rolling is activated by means of a holding function as soon as the starting means (2) is opened because the maximum load value (BINTmax) has been reached or exceeded, and the holding means is deactivated as soon as the load value (BINT) falls below the maximum load value (BINTmax) and the position of the performance control element (ALPHA) indicates that the performance control element is being operated.

10. A method according to claim 1, characterised in that in a function to recognise the applied pressure in order to determine a system actuating signal (PA), the actuating means (4) is activated for the purpose of closing the starting means (2) when

- a brake is operated and
- the position of the performance control element (ALPHA) indicates an unoperated performance control element and
- driving speed is approximately zero and
- the input speed signal (NE) is below a predetermined low threshold and
- a starting gear ratio is selected in a torque converter connected on the output side of the starting means (2),
at which a second actuating signal (PS2) for an actuator (4) of the starting means (2) is first reduced until the starting means (2) is reliably opened, the second actuating signal (PS2) is then progressively raised until the input speed signal (NE) has fallen by a predetermined value or a means for stabilising the input speed signal (NE) indicates a correction on the basis of a fall of the input speed signal (NE), and then the second actuating signal (PS2) of the actuator (4) which applies at that instant and is decreased by a predetermined amount, is stored as the system actuating signal (PA).

11. A method according to claim 10, characterised in that after each progressive rise of the second actuating signal (PS2), a waiting time is imposed, the activation of the actuating means (4) is discontinued as soon as one of the conditions specified in the introduction is no longer met and after the storing of the second actuating signal (PS2) which has been decreased by a predetermined amount, this second actuating signal is first issued to the actuating means (4) and only when the original input speed signal (NE) thereupon adjusts, or the means for stabilising the input speed signal (NE) indicates no further correction, is it stored as a system actuating signal (PA).

12. A method according to claim 1, characterised in that in a stationary disengagement function, the second actuating signal (PS2) issued to the actuating element (4) is reduced by a predetermined amount when

   - a brake on the vehicle was active for a predetermined time and was then released and
   - driving speed is approximately zero and
   - a starting gear ratio is selected in a torque converter connected on the output side of the starting means (2).

13. A method according to claim 1, characterised in that in a function to apply the starting means (2), an actuating pulse (Si) is released to the actuating element (4) when

   - a brake on the vehicle is released and
   - the output speed signal (NA) is low and
   - the input speed signal is below a predetermined low value and
   - a predetermined period has elapsed since the previous release of the actuating pulse (Si), the dimensions of the actuating pulse (Si) being such that dead travel present in the starting means (2) is overcome.

14. A method according to claim 1, characterised in that in a freewheel function for preventing free running, the actuating means (4) is activated for the purpose of closing the starting means (2) when

   - the position of the performance control element (ALPHA) is approximately zero and
   - a starting gear ratio is selected in a torque converter connected on the output side of the starting means (2) and
   - the input speed signal (NE) is at most a little above the idling speed of the driving engine (3) and
   - the output speed signal (NA) is greater than the input speed signal (NE) rated with the set gear ratio.

15. A method according to claim 2, characterised in that in a special starting function, in response to a particular request signal of the driver of the motor vehicle, a particular set curve of the first actuating signal (PS1) is selected which, compared with the set curves (B) which are usually used, first provides a markedly smaller rise of the first actuating signal (PS1) and in the vicinity of the set speed then provides a very rapid rise of the first actuating signal (PS1) above the input speed signal.

16. A method according to claim 15, characterised in that either operation of a brake on the vehicle at the same time as a high throttle signal (ALPHA) or operation of a separately located switch constitutes a special request signal.

17. A control device (1) for a driving engine (3) and an identification code converter (2), connected on the output side of the driving engine and acting as a starting means, comprising

   - a sensor (5) for the position of the performance control element (ALPHA) of the driving engine (3),
   - a sensor (6) for an input speed signal (NE) of the starting means (2),
   - a sensor (7) for an output speed signal (NA) of the starting means (2),
   characterised by
   - a subtracting element (13) for determining a differential speed signal (DN) as the difference between the input speed signal (NE) and the output speed signal (NA),
   - a first characteristic converter (8) for determining a set speed (Nsoll) in dependence on the signal (ALPHA) of the first sensor (5),
   - a control means (9) which receives signals both from the sensor (6) for the input speed (NE) and from the first characteristic converter (8) for determining a set speed (Nsoll), and, in a first phase of the starting operation, produces a differential actuating signal (DPS) such that the input speed signal (NE) is brought to the set speed signal (Nsoll), and in a second phase, produces the differential actuating signal (DPS) such that the differential speed signal (DN) varies with a speed (dDN/dt) which is dependent on the magnitude of the differential speed signal (DN),
   - a second characteristic converter (10) for determining a first actuating signal (PS1) in dependence on the position of the performance control element (ALPHA), the input speed signal (NE) and the set speed (Nsoll),

- a control means (11) for determining a second actuating signal (PS2) from the first actuating signal (PS1) and an applied actuating signal (PA), at which the identification code converter has still not transmitted any torque and

- an actuating means (4) acting on the starting means (2) in accordance with the sum of the second actuating signal (PS2) and the differential actuating signal (DPS).

18. A device according to claim 17, characterised in that the second characteristic converter (11) determines the set speed (Nsoll) in dependence on the position of the performance control element (ALPHA), the variation of this signal and a signal (SK) describing the driving style of the driver.

## Revendications

1. Procédé de commande de démarrage d'un entraînement de véhicule automobile, constitué d'une machine d'entraînement (3) et d'un convertisseur de caractéristiques (2) servant de dispositif de démarrage, monté en aval de la machine d'entraînement, dans lequel on utilise pour la commande du dispositif de démarrage (2), les grandeurs suivantes :

- position de l'organe de commande de puissance (ALPHA) de la machine d'entraînement (3),

- vitesse de rotation d'entrée (NE) du dispositif de démarrage (2) et

- vitesse de rotation de sortie (NA) du dispositif de démarrage (2),

- et dans lequel l'opération de démarrage est exécutée en au moins 2 phases, caractérisé en ce que
dans une première phase de l'opération de démarrage, la vitesse de rotation d'entrée (NE) est amenée vers une vitesse de rotation de consigne (Nsoll) et

- dans une deuxième phase suivante de l'opération de démarrage, un signal de vitesse de rotation différentielle (DN), formé à partir de la différence entre la vitesse de rotation d'entrée (NE) et la vitesse de rotation de sortie (NA), est amené à suivre une courbe de consigne jusqu'à la valeur zéro.

2. Procédé selon la revendication 1, caractérisé en ce qu'au cours de la première phase, qui commence lorsque le dispositif de démarrage n'est pas totalement fermé et la position de l'organe de commande de puissance (ALPHA) se situe au-dessous d'une valeur limite,

- la vitesse de rotation de consigne (Nsoll) est d'abord déterminée en fonction de la position de l'organe de commande de puissance (ALPHA),

- puis une courbe de consigne (B) d'un premier signal de réglage (PS1) pour un organe de réglage (4) du dispositif de démarrage (2) est déterminée de manière que la vitesse de rotation de consigne (Nsoll) est atteinte pour la position actuelle de l'organe de commande de puissance (ALPHA) et

- ensuite le premier signal de réglage (PS1) est déterminé et réglé en fonction de la position de l'organe de commande de puissance (ALPHA) et du signal de vitesse de rotation d'entrée (NE) d'après la courbe de consigne, de manière que le signal de vitesse de rotation d'entrée (NE) s'approche de la vitesse de rotation de consigne (Nsoll).

3. Procédé selon la revendication 2, caractérisé en ce que la vitesse de rotation de consigne (Nsoll) est déterminée en fonction de la position de l'organe de commande de puissance (ALPHA), de la variation dans le temps de la position de l'organe de commande de puissance (ALPHA) et d'un signal (SK) décrivant le style de conduite du conducteur.

4. Procédé selon la revendication 2, caractérisé en ce que le dispositif de réglage (4) reçoit un signal de pression de consigne (PS), qui est formé à partir de la somme d'un signal de réglage de système (PA) dépendant du système, du premier signal de réglage (PS1) ainsi que d'un signal de réglage différentiel (DPS).

5. Procédé selon la revendication 1, caractérisé en ce qu'au cours de la deuxième phase qui commence lorsque la différence entre le signal de vitesse de rotation d'entrée (NE) et la vitesse de rotation de consigne (Nsoll) se situe au-dessous d'une valeur limite ou lorsqu'une vitesse minimale donnée du véhicule est atteinte,

- un signal de réglage différentiel (DPS) est déterminé de manière qu'une variation de consigne du signal de vitesse de rotation différentielle (dDNsoll) est amenée vers la valeur zéro, en fonction du signal de vitesse de rotation différentielle (DN) suivant une courbe de consigne, la courbe de consigne présentant des variations de consigne (dDNsoll), diminuant lorsque diminue le signal de vitesse de rotation différentielle (DN).

6. Procédé selon la revendication 1, caractérisé par les étapes suivantes :

   - enregistrement du couple de rotation (M) transmis par le dispositif de démarrage (2),

   - détection d'une valeur de charge (BINT) du dispositif de démarrage (2) à partir de la vitesse de rotation d'entrée (NE), de la vitesse de rotation de sortie (NA) et du couple de rotation (M),

   - détermination de la vitesse de rotation de consigne (Nsoll) en fonction de la position de l'organe de commande de puissance (ALPHA) et de la valeur de charge (BINT).

7. Procédé selon la revendication 6, caractérisé par les étapes suivantes :

   - détermination de la valeur de charge (BINT) en tant que produit du couple de rotation (M) et de la différence du signal de vitesse de rotation d'entrée (NE) et du signal de vitesse de rotation de sortie (NA), lorsque la différence des vitesses de rotation dépasse une valeur limite et dans un autre cas
   - détermination de la valeur de charge (BINT) par réduction selon une fonction donnée.

8. Procédé selon la revendication 6 ou 7, caractérisé en ce que par une fonction d'avertissement, un signal d'avertissement est donné dès que la valeur de charge (BINT) a atteint une proportion donnée d'une valeur de charge maximale (BINT max), le signal d'avertissement délivré étant modulé par la grandeur de la valeur de charge (BINT), et le dispositif de démarrage (2) est ouvert, dès que la valeur de charge (BINT) atteint ou dépasse la valeur de charge maximale (BINT max).

9. Procédé selon la revendication 8, caractérisé en ce que par une fonction de maintien est activé un dispositif de maintien, qui empêche le véhicule de rouler, dès que le dispositif de démarrage (2) est ouvert, du fait que la valeur de charge maximale (BINT max) est atteinte ou dépassée, et le dispositif de maintien est désactivé, dès que la valeur de charge (BINT) dépasse la valeur de charge maximale (BINT max) et la position de l'organe de commande de puissance (ALPHA) permet de conclure à un actionnement de l'organe de commande de puissance.

10. Procédé selon la revendication 1, caractérisé en ce que dans une fonction pour la reconnaissance de la pression d'application, en vue de la détermination d'un signal de réglage de système (PA), le dispositif de réglage (4) est commandé dans le sens de la fermeture du dispositif de démarrage (2), lorsque

    - un frein est actionné et

    - la position de l'organe de commande de puissance (ALPHA) permet de conclure à un organe de commande de puissance non actionné et

    - une vitesse de marche est approximativement égale à zéro et

    - le signal de vitesse de rotation d'entrée (NE) est inférieur à un seuil bas, donné et

    - dans un convertisseur de couple de rotation, situé en aval du dispositif de démarrage (2), un rapport de transmission de démarrage est sélectionné,
    un deuxième signal de réglage (PS2) pour un organe de réglage (4) du dispositif de démarrage (2) étant d'abord suffisamment réduit pour que le dispositif de démarrage (2) soit sûrement ouvert, le deuxième signal de réglage (PS2) étant ensuite augmenté progressivement, jusqu'à ce que le signal de vitesse de rotation d'entrée (NE) soit réduit d'une valeur donnée ou un dispositif de stabilisation du signal de vitesse de rotation d'entrée (NE) signalant un réglage complémentaire en raison d'une chute du signal de vitesse de rotation d'entrée (NE), et ensuite le deuxième signal de réglage (PS2) de l'organe de réglage (4) présent à cet instant et réduit d'une valeur donnée, étant mémorisé en tant que signal de réglage de système (PA).

11. Procédé selon la revendication 10, caractérisé en ce qu'après chaque augmentation progressive du deuxième signal de réglage (PS2), un temps d'attente est mis en place, la commande du dispositif de réglage (4) est interrompue, dès que l'une des conditions citées au début n'est plus satisfaite et après mémorisation du deuxième signal de réglage (PS2), réduit d'une valeur donnée, celui-ci est d'abord délivré au dispositif de réglage (4) et n'est mémorisé, comme signal de réglage de système (PA), que si après cela le signal de vitesse de rotation d'entrée (NE) initial s'établit ou si le dispositif de stabilisation du signal de vitesse de rotation d'entrée (NE) ne signale plus de réglage complémentaire.

12. Procédé selon la revendication 1, caractérisé en ce que dans une fonction de désaccouplage d'état le deuxième signal de réglage (PS2) délivré à l'élément de réglage (4), est réduit d'une valeur donnée, si

- un frein du véhicule a été actif pendant un temps donné puis a été relâché et

- une vitesse de marche est approximativement égale à zéro et

- dans un convertisseur de couple de rotation, situé en aval du dispositif de démarrage (2), un rapport de transmission de démarrage est sélectionné.

13. Procédé selon la revendication 1, caractérisé en ce que dans une fonction de mise en place du dispositif de démarrage (2) une impulsion de réglage (Si) est délivrée à l'élément de réglage (4), si

- un frein du véhicule est relâché et

- le signal de vitesse de rotation de sortie (NA) est faible et

- le signal de vitesse de rotation d'entrée (NE) se situe au-dessous d'une petite valeur donnée et

- depuis la délivrance précédente de l'impulsion de réglage (Si), il s'est écoulé un intervalle de temps donné,
l'impulsion de réglage (Si) étant telle que des courses à vide, existant dans le dispositif de démarrage (2), sont surmontées.

14. Procédé selon la revendication 1, caractérisé en ce que dans une fonction de roue libre pour empêcher le roulement libre, le dispositif de réglage (4) est commandé dans le gens de la fermeture du dispositif de démarrage (2), si

- la position de l'organe de commande de puissance (ALPHA) est approximativement sur zéro et

- dans un convertisseur de couple de rotation, situé en aval du dispositif de démarrage (2), un rapport de transmission de démarrage est sélectionné et

- le signal de vitesse de rotation d'entrée (NE) se situe au plus légèrement au-dessus de la vitesse de rotation de ralenti de la machine d'entraînement (3) et

- le signal de vitesse de rotation de sortie (NA) est supérieur au signal de vitesse de rotation d'entrée (NE) évalué avec le rapport de transmission sélectionné.

15. Procédé selon la revendication 2, caractérisé en ce que dans une fonction de démarrage particulier, à la suite d'un signal de demande particulier du conducteur du véhicule, une courbe de consigne particulière du premier signal de réglage (PS1) est sélectionnée, qui prévoit, par rapport aux courbes de consigne (8) habituellement utilisées, d'abord une montée nettement réduite du premier signal de réglage (PS1) et à proximité de la vitesse de rotation de consigne, une montée ensuite très rapide du premier signal de réglage (PS1) au-dessus du signal de vitesse de rotation d'entrée.

16. Procédé selon la revendication 15, caractérisé en ce que comme signal de demande particulier on a soit un actionnement d'un frein du véhicule avec en même temps signal de clapet d'étranglement (ALPHA) élevé ou un actionnement d'un commutateur monté séparément.

17. Dispositif de commande (1) pour une machine d'entraînement (3) et un convertisseur de caractéristiques (2) servant de dispositif de démarrage, situé en aval de la machine d'entraînement avec

- un capteur (5) pour la position de l'organe de commande de puissance (ALPHA) de la machine d'entraînement (3),

- un capteur (6) pour un signal de vitesse de rotation d'entrée (NE) du dispositif de démarrage (2),

- un capteur (7) pour un signal de vitesse de rotation de sortie (NA) du dispositif de démarrage (2),
caractérisé par

- un formateur de différence (13) pour la détermination d'un signal de vitesse de rotation différentielle (DN) en tant que différence entre le signal de vitesse de rotation d'entrée (NE) et le signal de vitesse de rotation de sortie (NA),

- un premier convertisseur de courbes caractéristiques (8) pour la détermination d'une vitesse de rotation de consigne (Nsoll) en fonction du signal (ALPHA) du premier capteur (5),

- un dispositif de régulation (9) qui reçoit des signaux du capteur (6) pour la vitesse de rotation d'entrée (NE) ainsi que du premier convertisseur de courbes caractéristiques (8) pour la détermination d'une vitesse de rotation de consigne (Nsoll) et qui, dans une première phase de l'opération de démarrage, produit un signal de réglage différentiel (DPS) tel que le signal de vitesse de rotation d'entrée (NE) est amené vers le signal de vitesse de rotation de consigne (Nsoll) et dans une deuxième phase, le signal de réglage différentiel (DPS) est produit de manière que le signal de vitesse de rotation différentielle (DN) varie avec une vitesse (dDN/dt), dépendant de la grandeur du signal de vitesse de rotation différentielle (DN),

- un deuxième convertisseur de courbes caractéristiques (10) pour la détermination d'un premier signal de réglage (PS1) en fonction de la position de l'organe de commande de puissance (ALPHA), du signal de vitesse de rotation (NE) et de la vitesse de rotation de consigne (Nsoll),

- un dispositif de commande (11) pour la détermination d'un deuxième signal de réglage (PS2) à partir du premier signal de réglage (PS1) et d'un signal de réglage d'application (PA), pour lequel le convertisseur de caractéristique ne transmet pas encore de moment et un dispositif de réglage (4) agissant sur le dispositif de démarrage (2), en fonction de la somme du deuxième signal de réglage (PS2) et du signal de réglage différentiel (DPS).

18. Procédé selon la revendication 17, caractérisé en ce que le deuxième convertisseur de courbes caractéristiques (11) détermine la vitesse de rotation de consigne (Nsoll) en fonction de la position de l'organe de commande de puissance (ALPHA), de la variation de ce signal et d'un signal (SK) décrivant le style de conduite du conducteur.

Fig.1

EP 0 638 454 B1

Fig. 2

Fig. 3

Fig. 4

Fig. 5a

Fig. 5b

START

15
14
16
17  N
J

20  19
21  N
J

23
26
J

24  J
27
J
N  28
J
24  J

29
25

Fig.6